# EUROPÄISCHE PATENTSCHRIFT

(11) **EP 0 740 534 B1**
(45) Veröffentlichungstag und Bekanntmachung des Hinweises auf die Patenterteilung: **21.05.2003**
(21) Anmeldenummer: 95937049.5
(22) Anmeldetag: 03.11.1995
(51) Int. Cl.: A61C 3/03, A61C 5/00

(54) **Werkzeug und Einsatzteil ZUR BESEITIGUNG EINES DEFEKTES AN EINEM ZAHN**
INLAY AND TOOL FOR REMOVING A LESION ON A TOOTH
INCRUSTATION ET OUTIL D'ELIMINATION D'UNE LESION SUR UNE DENT

(30) Priorität: 04.11.1994 DE 4439410
(43) Veröffentlichungstag der Anmeldung: 06.11.1996
(73) Patentinhaber: KALTENBACH & VOIGT GMBH & CO., 88400 Biberach (DE)
(72) Erfinder: HUGO, Burkhard, D-97265 Hettstadt (DE)
(74) Vertreter: Schmidt-Evers, Jürgen, Dipl.-Ing.
(86) Internationale Anmeldenummer: EP9504328
(87) Internationale Veröffentlichungsnummer: WO96014024

(56) Entgegenhaltungen:
- EP-A- 0 039 300
- DE-A- 4 209 191
- DE-B- 1 258 017
- DE-U- 29 503 782

## Beschreibung

Die Erfindung bezieht sich auf ein Werkzeug nach dem Oberbegriff des Anspruchs 1 oder aufein Einsatzteil zur Beseitigung eines Defektes an einem zahngemäß anspruch 12.

Es gibt verschiedene Ursachen, die die spanabhebende Ausarbeitung einer Kavität an einem Zahn und die Wiederherstellung des Zahns durch eine Präparation der Kavität begründet. Eine solche Maßnahme kann z.B. aus ästhetischen Gründen zur Beseitigung einer unbefriedigenden Form eines Teils des Zahns erfolgen. In den meisten Fällen erfolgen diese Maßnahmen jedoch zur Wiederherstellung eines kranken Zahnes, nämlich zur Beseitigung eines kariösen Defektes. Ein weiterer Grund für eine vorbeschriebene Maßnahme kann auch ein Austausch aus verschiedenen Gründen unbefriedigender Zahnfüllungen sein.

In der DE 42 09 191 A1 sind eine Vorrichtung und ein Verfahren zur Bearbeitung natürlicher Hartgewebe unter Verwendung von oszillierenden Werkzeugen beschrieben. Bei dieser bekannten Vorrichtung wird zur Ausarbeitung einer okklusalen Kavität ein Werkzeug benutzt, das an seiner Oberfläche geometrisch definierte Schneiden oder geometrisch unbestimmte Schneiden wie adhärente Diamantkörner aufweist, die eine spanabhebende Bearbeitung des Zahnmaterials bei der oszillierenden Bewegung des Werkzeugs ermöglichen. Mit dem Werkzeug wird eine Kavität mit einer nach innen konvergierenden Umfangswand ausgearbeitet, deren Querschnittsgröße ein Vielfaches der Querscimittsgröße des Werkzeugs beträgt und deren Querschnittsform sich wesentlich von der Querschnittsform des Werkzeugs unterscheidet. Das Werkzeug ist mittels einer Spannvorrichtung lösbar in einem Handstück befestigt. Das Handstück weist in einem nach hinten gerichteten Abstand vom das Werkzeug aufnehmenden Handstückkopf einen Fluidaustritt auf, durch den ein auf die Behandlungsstelle und auf das Werkzeug gerichteter Fluidstrom, z.B. Wasser oder eine Kochsalzlösung, zwecks Kühlung und Spülung zugeführt werden kann. Maßnahmen zur Füllung der Kavität und Versorgung des Zahnes sind in dieser Druckschrift nicht beschrieben. Diese bekannte Vorrichtung und dieses bekannte Verfahren sind nicht nur arbeits- und zeitaufwendig soweit die Präparation der Kavität betroffen ist, sondern auch im Hinblick auf übliche Methoden zur Füllung der Kavität, wobei diesbezüglich Anforderungen an die Durchführbarkeit der Präparations- und Versorgungsarbeit, an die dabei erforderliche Handhabbarkeit, an die Festigkeit sowie Belastbarkeit und an die Lebensdauer der Versorgung gestellt sind.

Vorbeschriebene Versorgungsmaßnahmen an einem Zahn ergeben sich nicht nur in dessen okklusalen Bereich sondern auch in dessen lateralen und approximalen Bereich. Insbesondere approximale Präparationen und Versorgungen sind wegen eines benachbarten Zahns und die dadurch vorgegebene beschränkte Zugänglichkeit schwierig auszuführen, wobei die Gefahr der Verletzung des Nachbarzahns gegeben ist.

Die Versorgung einer Kavität mit einem laborgefertigten Inlay ist arbeitsintensiv und entsprechend teuer. Außerdem kann der zu behandelnde Zahn erst in einer zweiten Behandlungssitzung und somit. "zweizeitig" definitiv versorgt werden. Um den Aufwand für eine Versorgung zu verringern, ist bereits vorgeschlagen worden, am Behandlungsort hergestellte Inlays zu verwenden, wie es z.B. beim sogenannten computergesteuerten Fräsen von Inlays möglich ist. Des weiteren ist bereits vorgeschlagen worden, zur Versorgung von Kavitäten vorgefertigte Inlays zu verwenden, wodurch ebenfalls eine Versorgung in nur einer Behandlungssitzung und somit "einzeitig" möglich ist. Bei einer solchen Maßnahme bedarf es jedoch besonderer Präparations- und Versorgungsmaßnahmen, die wiederum handhabungs- sowie zeitaufwendig und teuer sind.

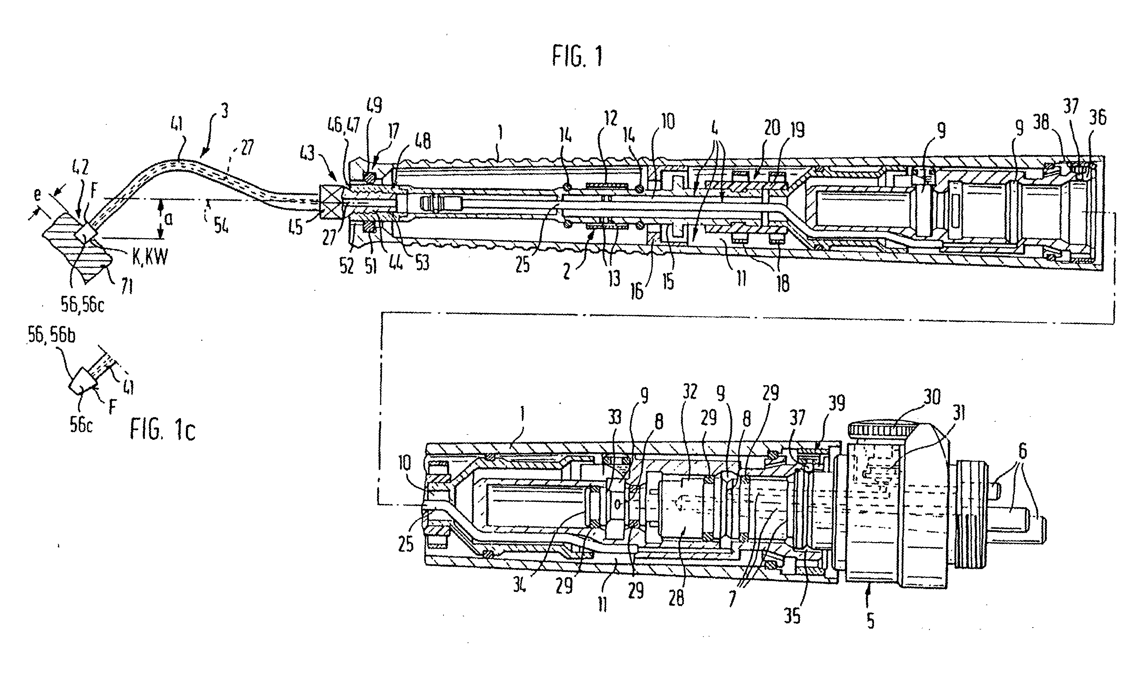

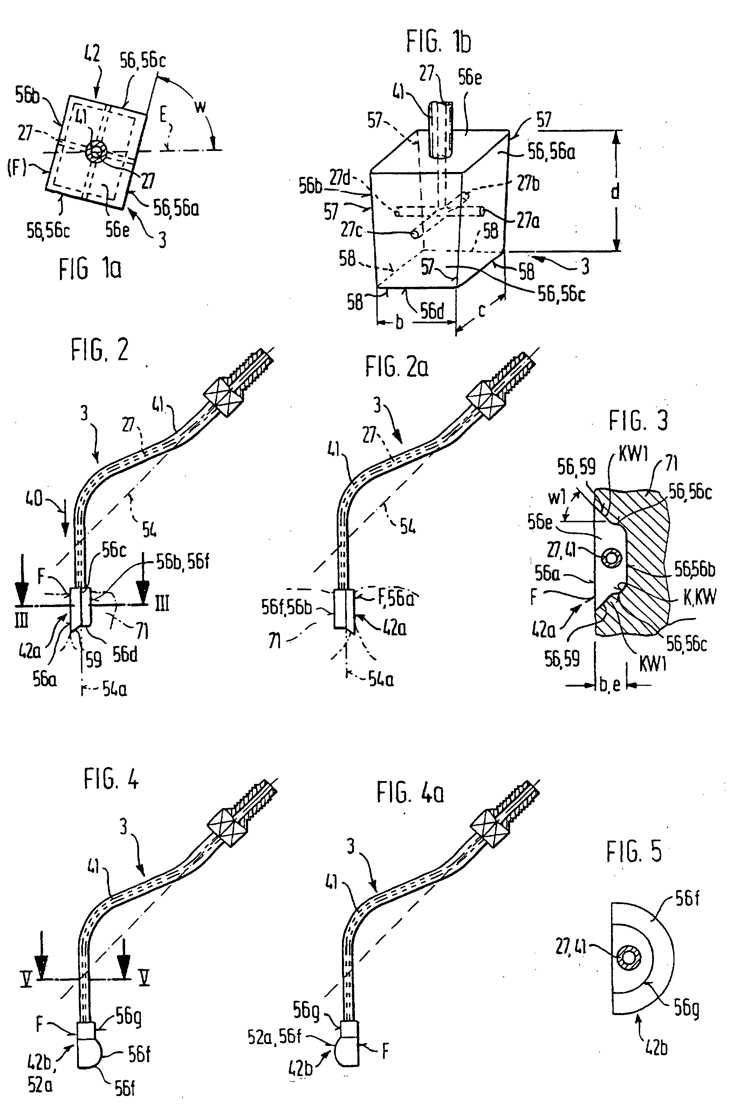

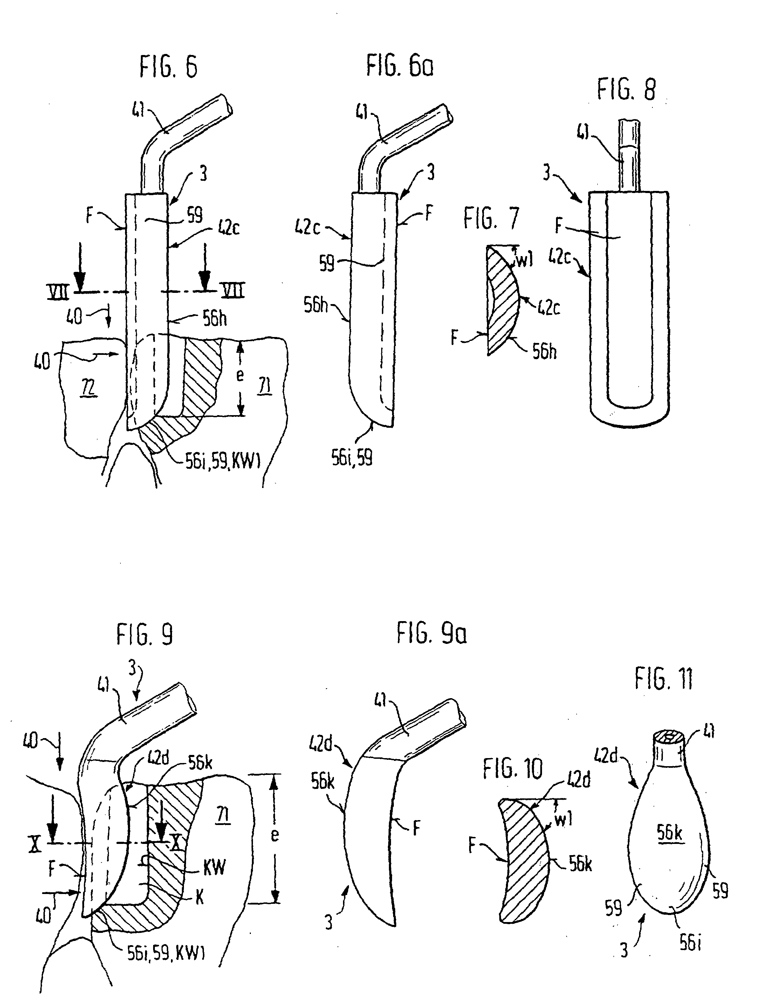

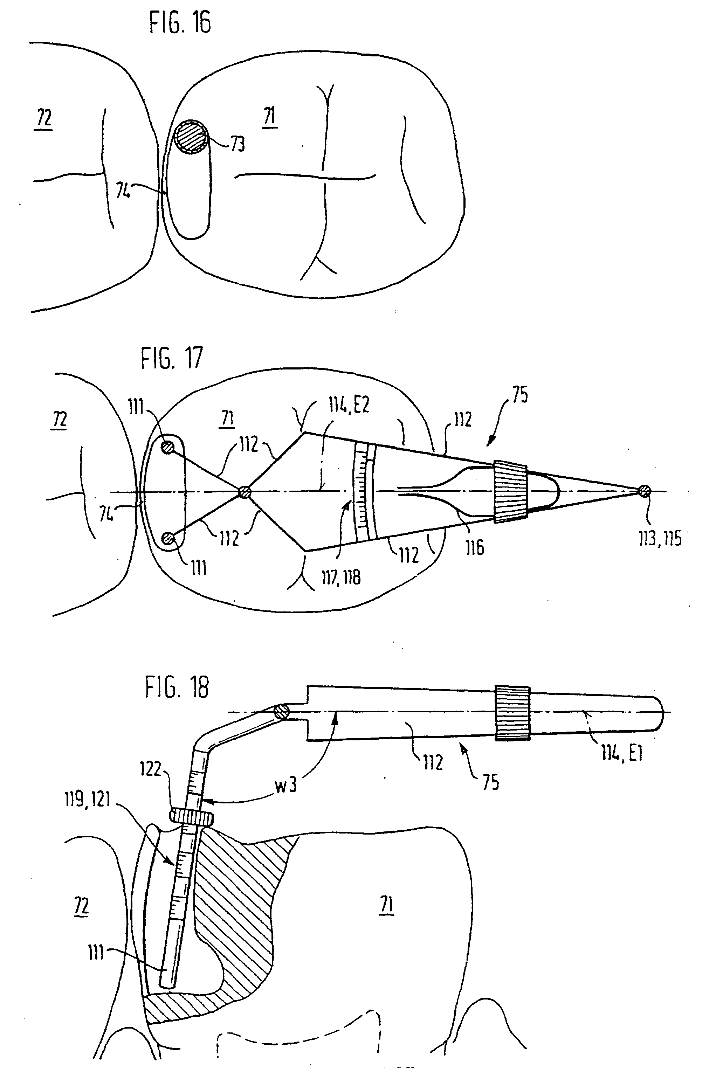

In der US 4 954 082 ist ein dentalmedizinisches Werkzeug nach dem Oberbegriff des Anspruchs 1 beschrieben, wobei das Werkzeug ein dünnes Feilenblatt und einen Schaft aufweist, mit dem es zu seiner Verbindung mit dem Handstück in eine sogenannte Aufnahmehülse des Handstücks einsteckbar und positionierbar ist. Im Funktionsbetrieb wird dem Werkzeug eine in der Längsrichtung des Schaftes verlaufende lineare Hubbewegung dadurch übertragen, daß die Aufnahmehülse in der Längsrichtung ihrer Mittelachse hin und her bewegt wird (reciprocating movement). Dies läßt sich am besten in Fig. 17 erkennen, die die Aufnahmehülse im axialen Schnitt zeigt. Die lineare Hubbewegung ist als Doppelpfeil im Bereich des Schaftes verdeutlicht. Das Werkzeug weist einen Zuführungskanal für ein Fluid, z. B. Zahnpasta, auf, das an Perforationsöffnungen am Feilenblatt austritt, siehe Sp. 5, Z. 4 bis 6. Die Zahnpasta kann abrasive Partikel enthalten, siehe Sp. 6, Z. 5 bis 7. Beim Ausführungsbeispiel nach Fig. 10 bis 13 sind eine oder beide Hauptflächen 107 des Feilenblattes abrasiv ausgebildet, siehe Sp. 7, Z. 7 bis 11. Dieses feilenblattförmige Werkzeug eignet sich für eine Oberflächenbearbeitung am Zahn, z. B. im Zahnzwischenbereich gemäß Fig. 1.

Der Erfindung liegt die Aufgabe zugrunde, ein Werkzeug nach dem Oberbegriff des Anspruchs 1 oder ein Einsatzteil zur Beseitigung eines Defektes an einem Zahn zu verbessern.

Diese Aufgabe wird durch die Merkmale des Anspruchs 1 oder 12 gelöst.

Beim erfindungsgemäßen System werden ein oszillierend arbeitendes Werkzeug zur Präparation einer Kavität und ein in die Kavität einsetzbares Einsatzteil verwendet, die wenigstens in dem Bereich aneinander angepaßt sind, der durch die das Einsatzteil umschließenden Zahnwände der Kavität vorgegeben ist. Hierdurch ist es möglich, eine paßgenaue Kavität zu präparieren und den Zahn zu versorgen, ohne daß eine besondere Aufmerksamkeit auf die Paßform der Kavität und des Einsatzteils gerichtet werden muß. Dies ist dadurch vorgegeben, daß ein oszillierend arbeitendes Werkzeug benutzt wird, das aufgrund der Oszillation von einer Rotationsbewegung unabhängig ist und deshalb in wahlweisen Formen hergestellt werden kann. Bei allen diesen Formen läßt sich in einfacher Weise eine der Form des Werkzeugs entsprechende Kavität spanabhebend am Zahn anbringen. Das Werkzeug braucht lediglich in das Zahnmaterial oszillierend eingesenkt zu werden. Dabei wird selbsttätig eine bestimmte Form der Kavilät erreicht. Dadurch, daß gemäß der Erfindung ein Einsatzteil verwendet wird, das wenigstens in dem durch die Wände der Kavität gebildeten Bereich an die Form und Größe des Werkzeugs angepaßt ist, bedarf es keiner besonderen Maßnahme zur Anpassung der Kavitätenform an das Einsatzteil, denn es wird selbsttätig die Übereinstimmung erreicht. Der Begriff Übereinstimmung ist so zu verstehen, daß die Form und Größe des Einsatzteils unter Berücksichtigung eines geringen Spiels oder Spaltes der betreffenden Form und Größe des Werkzeugs bzw. der Kavität entspricht. Ein solches Spiel kann als geringer Größenunterschied vorgesehen werden oder es ergibt sich dieses Spiel aufgrund der oszillierenden Bewegung des Werkzeugs selbsttätig. Ein solches Spiel ist erforderlich, um das Einsatzteil ohne Klemmungen in die Kavität einsetzen zu können. Dabei ist zu berücksichtigen, daß aufgrund der Rauheit der Wandflächen der Kavität ein gewisses Spiel von Vorteil ist. Außerdem bedarf es des Spieles bzw. Spaltes, um darin das plastische und aushärtende Verbindungsmittel anzuordnen, sowie zum einen eine feste und zum anderen eine dichte Verbindung zwischen dem Zahn und dem Einsatzteil zu gewährleisten.

Die Erfindung ermöglicht somit eine einfache, handhabungsfreundliche und schnell durchführbare Versorgung eines Zahnes, die nicht nur kostengünstig ist sondern auch von besonderer Qualität hinsichtlich ihrer Festigkeit und Belastbarkeit sowie Lebensdauer ist.

Das erfindungsgemäße System eignet sich besonders vorteilhaft für eine Versorgung im unzugänglichen approximalen Bereich der Zähne. Dabei lassen sich Beschädigungen der benachbarten Zähne vermeiden, da diejenigen Flächen des Werkzeuges, die bei der Präparation in Kontakt mit der Nachbarzahnfläche treten, nicht spanabhebend gestaltet sind.

Die Flächen des Werkzeugs und des zugehörigen Einsatzteils, die nicht zu dem Bereich gehören, der durch die Wandflächen der Kavität vorgegeben ist, brauchen nicht im vorbeschriebenen Sinne aufeinander abgestimmt zu sein. Wenn es sich bei einer solchen Bereichsfläche um eine laterale oder approximale Fläche des Einsatzteils handelt, kann diese ebenfalls vorgefertigt sein, z.B. in idealisierter Form. Im okklusalen Bereich einer rein okklusalen oder auch lateralen bzw. approximalen Kavität kann das Einsatzteil größer bemessen sein als das erforderliche Maß und nach Befestigung in der Kavität durch spanabhebende Bearbeitung angepaßt werden. Dies gilt natürlich auch für eine laterale Fläche des Einsatzteils. Es ist im Rahmen der Erfindung jedoch auch möglich, die vertikale Abmessung fiir eine okklusal offene Kavität geringer zu bemessen als die erforderliche Abmessung, und nach der Befestigung des Einsatzteils in der Kavität diese Abmessung durch einen Materialaufbau zu vervollständigen, z.B. in einem Zuge mit einem sich auch auf einen benachbarten oder den übrigen okklusalen Bereich des Zahns erstreckenden Bereich.

Es ist vorteilhaft, an einem Behandlungsplatz mehrere Werkzeuge und mehrere daran im erfindungsgemäßen Sinne angepaßte Formteile vorzusehen, die sich hinsichtlich ihrer Größe in einer und/oder beider Dimensionen ihrer Querschnittsform und/oder ihrer Höhe und/oder ihrer Farbgebung unterscheiden. Hierdurch ist es nicht nur möglich, ein fiir eine bestimmte Größe des Defektes entsprechend groß bemessenes Werkzeug und auch ein zugehöriges Einsatzteil zu benutzen, sondern es ist auch möglich, eine Kavität durch die nacheinanderfolgende Benutzung immer größerer Werkzeuge in mehreren Arbeitsgängen auszuarbeiten.

Ein weiterer Vorteil der Erfindung besteht darin, einander gegenüberliegende Flächen des Werkzeugs in dessen Vortriebsrichtung konvergent auszubilden, so daß das in das Zahnmaterial eingearbeitete Werkzeug ohne Klemmung aus der so gebildeten Kavität wieder herausgezogen werden kann.

Im weiteren bezieht sich die Erfindung auch auf ein Werkzeug und ein Einsatzteil mit den erfindungsgemäßen Merkmalen. Die vorbeschriebenen Vorteile gelten auch für das Werkzeug und das Einsatzteil.

Die Erfindung bezieht sich auch auf ein Verfahren zur Beseitigung eines Defektes an einem Zahn, das aus gleichen bzw. entsprechenden Gründen vorteilhaft ist.

Nachfolgend werden die Erfindung und weitere durch sie erzielbare Vorteile anhand von vorteilhaften Ausgestaltungen und einer Zeichnung näher erläutert. Es zeigt:
- Fig. 1: ein erfindungsgemäßes Werkzeug in der Seitenansicht mit einem zugehörigen Handstück zur Befestigung und Handhabung des Werkzeugs im axialen Schnitt;
- Fig. 1a: einen Arbeitskopf des Werkzeugs in der Draufsicht;
- Fig. 1b: den Arbeitskopf in perspektivischer Darstellung;
- Fig 2: das Werkzeug in abgewandelter Ausgestaltung;
- Fig. 2a: ein Werkzeug nach Fig. 2 in weiter abgewandelter Ausgestaltung;
- Fig. 3: den Schnitt III-III in Fig. 2;
- Fig. 4: ein Werkzeug in weiter abgewandelter Ausgestaltung;
- Fig. 4a: das Werkzeug nach Fig. 4 in weiter abgewandelter Ausgestaltung;
- Fig. 5: den Schnitt V-V in Fig. 4;
- Fig. 6: ein Werkzeug in weiter abgewandelter Ausgestaltung;
- Fig. 6a: das Werkzeug nach Fig. 6 in weiter abgewandelter Ausgestaltung;
- Fig. 7: den Schnitt VII-VII in Fig. 6;
- Fig. 8: das Werkzeug nach Fig. 6 in der Seitenansicht von links;
- Fig. 9: ein Werkzeug in weiter abgewandelter Ausgestaltung;
- Fig. 9a: das Werkzeug nach Fig. 9 in weiter abgewandelter Ausgestaltung;
- Fig. 10: den Schnitt X-X in Fig. 9;
- Fig. 11: das Werkzeug nach Fig. 9 in der Seitenansicht von links;
- Fig. 12: einen Zahn in der Draufsicht mit mehreren angedeuteten Arbeitsköpfen unterschiedlicher Größe;
- Fig. 13: die Anordnung nach Fig. 12 in der Seitenansicht von links;
- Fig. 14: ein Werkzeug mit einem Handstück in abgewandelter Ausgestaltung;
- Fig. 14a: das Werkzeug nach Fig. 14 in abgewandelter Ausgestaltung;
- Fig. 15: den Schnitt XV-XV in Fig. 14;
- Fig. 16: einen Zahn in der Draufsicht mit einer vorpräparierten Kavität;
- Fig. 17: den Zahn nach Fig. 16 mit einem Meßwerkzeug zum Ausmessen der Kavität;
- Fig. 18: die Anordnung nach Fig. 17 in der Seitenansicht, teilweise geschnitten;
- Fig. 19: den Zahn in der Draufsicht mit einem in der Kavität angeordneten Arbeitskopf;
- Fig. 20: die Anordnung nach Fig. 19 in abgewandelter Ausgestaltung in der Seitenansicht, teilweise geschnitten;
- Fig. 21: den Zahn in der Draufsicht mit einem in die Kavität eingesetzten Insert;
- Fig. 22: die Anordnung nach Fig. 21 in der Seitenansicht, teilweise geschnitten;
- Fig. 23: eine Preß- oder Gießform für mehrere Inserts in perspektivischer Darstellung;
- Fig. 24: ein Insert in perspektivischer Darstellung in abgewandelter Ausgestaltung;
- Fig. 25: eine Preß- oder Gießform für ein Insert nach Fig. 24 in perspektivischer Darstellung;
- Fig. 26: einen Zahn mit einem approximalen Insert und einem okklusalen Insert, teilweise geschnitten.;
- Fig. 27: einen Zahn und eine Kavität mit einem darin eingesetzten Werkzeug in abgewandelten Ausgestaltungen in der Seitenansicht, teilweise geschnitten;
- Fig. 28: einen Zahn und eine Kavität mit einem darin eingesetzten Werkzeug in weiter abgewandelten Ausgestaltungen, teilweise geschnitten;
- Fig. 28a: den Zahn nach Fig. 28 im versorgten Zustand;
- Fig. 29: ein Werkzeug in weiter abgewandelter Ausgestaltung in der Seitenansicht;
- Fig. 30: den Teilschnitt XXX-XXX in Fig. 29;
- Fig. 31: den Teilschnitt XXXI-XXXI in Fig. 29;
- Fig. 32: einen Längsschnitt durch ein Werkzeug weiter abgewandelter Ausgestaltung;
- Fig. 33: den Arbeitskopf nach Fig. 32 in der Seitenansicht von rechts;
- Fig. 34: den Schnitt XXXIV-XXXIV in Fig. 33;
- Fig. 35: einen Arbeitskopf in weiter abgewandelter Ausgestaltung in vergrößerter Vorderansicht;
- Fig. 36: den Arbeitskopf nach Fig. 36 in der Seitenansicht.
- Fig. 37: einen Arbeitskopf in der Vorderansicht in weiter abgewandelter Ausgestaltung;
- Fig. 38: den Arbeitskopf nach Fig. 37 im seitlichen Schnitt;
- Fig. 39: den Arbeitskopf in der Unteransicht;
- Fig. 40: einen Zan mit einem Arbeitskopf nach Fig. 37 in der Draufsicht.

Das Handstück besteht aus einer länglichen runden Griffhülse 1, in der ein Schwingungserzeuger 2 angeordnet ist, der vorzugsweise lösbar mit dem Werkzeug 3 verbunden ist, um das am vorderen Ende der Griffhülse 1 schwingbar gelagerte Werkzeug 3 in Schwingungen zu versetzen, und dabei Schwingungen auf das Werkzeug 3 zu übertragen. Die Griffhülse 1 besitzt in ihrem Inneren zwei sich von hinten nach vorne erstreckende Versorgungs-Mediumleitungen 4. Diese Mediumleitungen 4 sind über Anschlußleitungen 7 eines am werkzeugfernen Ende der Griffhülse 1 angeordneten Anschlußstückes 5 an jeweils eine zu einer nicht dargestellten Mediumquelle führende Verbindungsleitung 6 angeschlossen, die sich in einem flexiblen Versorgungsschlauch erstrecken, mit dem das Anschlußstück 5 verbunden ist.

Das Anschlußstück 5 ist als gegenüber der Griffhülse 1 frei drehbare, schnell lösbare und schnell zusammenfügbare Schnellkupplung ausgebildet. Die Schnellkupplung und das werkzeugferne Ende der Griffhülse 1 sind mit in jeder Drehstellung wirksamen Mediumübertrittsmitteln 8, 9 versehen, wobei Kühlmittelaustrittsöffnung einer der Verbindungsleitungen 6 und 9 ein Kühlmittel-Zuführungskanal einer zum Werkzeug 3 führenden Kühlmittelleitung 25 ist.

Als weitere Mediumleitung 4 ist eine zum Schwingungserzeuger 2 führende Energiezufuhrleitung vorgesehen.

Als zusätzliche Mediumleitung 4 ist die zum Zahnsteinentfernungs-Werkzeug 3 führende Kühlmittelleitung 25 vorgesehen. Das Kühlmittel kann Luft, Wasser oder ein durch ein Luft-Wasser-Gemisch gebildeter Spray sein. Die Kühlmittelleitung 25 mündet in das hohl ausgebildete Werkzeug 3 ein, das eine auf den Behandlungsbereich gerichtete Kühlmittel-Austrittsöffnung oder in seinem Arbeitsflächen austretende Austrittsöffnungen aufweist. Der Hohlkanal des Werkzeuges 3 ist mit 27 bezeichnet.

Das Anschlußstück 5 ist mit einem in das werkzeugferne Ende der Griffhülse 1 einsteckbaren, einrastenden im Querschnitt kreisrunden, zentralen Führungszapfen 28 versehen, gegenüber welchen die Griffhülse 1 auch im eingerasteten Zustand frei drehbar ist.

Im einzelnen sind die Medienübertrittsmittel durch jeweils zwischen zwei den Führungszapfen 28 umgebenden, zur Anlage an die Griffhülseninnenwandung kommenden, ringförmigen Dichtungselementen 29 angeordneten Austrittsöffnungen 8 der an die Verbindungsleitungen 6 angeschlossenen Anschlußkanäle 7 und durch die den Austrittsöffnungen 8 zugeordneten, im Bereich der Griffhülseninnenwandung vorgesehenen Ringkanäle gebildet.

Das Anschlußstück 5 besitzt mindestens ein mit einem von außen betätigbaren Stellglied 30 versehenes, mindestens der als Kühlmittelleitung 25 vorgesehenen Mediumleitung 4 zugeordnetes Steuerorgan 31.

Sofern für die ein einrastendes Festhalten des Führungszapfens 28 in der Griffhülse 1 bewirkende Klemmkraft die Elastizität der Dichtungselemente 29 nicht ausreicht, kann hierfür, wie dargestellt, eine den Führungszapfen 28 in der eingesteckten Axial-Sollstellung haltende besondere Rastanordnung 39 vorgesehen sein. Hierfür ist auf der Außenwandung des Führungszapfens 28 ein besonderer Rast-Ringkanal 35 und in der Wandung der Griffhülse 1 mindestens eine in einer Ausnehmung 36 gelagerte Rastkugel 37 angeordnet. Die Rastkugel 37 greift dabei unter der Wirkung einer Feder 38 mit dem kleineren Teil ihrer Oberfläche über die Innenfläche der Wandung der Griffhülse 1 hinausragend in den Rast-Ringkanal 35 ein. Hierfür besitzt die Ausnehmung 36 einen mit der genannten Innenfläche der Wandung der Griffhülse 1 fluchtenden Boden, welcher eine Öffnung aufweist, die kleiner als die Äquatorialebene der Rastkugel 37 ist. Während des Einsteckvorganges bzw. während des Auseinanderziehvorganges wird die Rastkugel 37 entgegen der Wirkung der Feder 38 aus dem Rast-Ringkanal 35 herausbewegt, so daß sich beim Einsteckvorgang bzw. beim Auseinanderziehvorgang ein leichtes und schnelles Einnehmen und Lösen der Einraststellung ergibt.

Das Werkzeug 3 besteht aus einem Schaft 41, einem Arbeitskopf 42 am vorderen Ende des Schaftes 41 und ein Verbindungselement 43 am hinteren Ende des langgestreckten Schaftes 41. Bei der vorliegenden Schraubverbindung ist ein Gewindezapfen 44 vorgesehen, der von einem Drehangriffselement 45, hier einem Bund in Form eines Sechskantes zurückragt. Das rückseitige Ende des Drehangriffselements 45 ist kegelförmig ausgebildet. Mit dieser Außenkegelfläche 46 liegt das Werkzeug 3 im verbundenen Zustand an einer entsprechend geformten Innenkegelfläche 47 am werkzeugseitigen Ende einer Lagerhülse 48 an, die einstückig oder zweistückig mit dem hülsenförmigen Resonanzkörper 15 verbunden ist und in einem ebenfalls die Lagerung 17 bildenden Lagerring 49 spielfrei oder mit geringem Bewegungsspiel gelagert ist, der im vorderen Endbereich der Griffhülse 1 an letzterer befestigt ist und durch einen Ring aus elastischem Material gebildet sein kann, der in einer Innennut 51 in der Griffhülse 1 sitzt, wobei die Lagerhülse 48 das zugehörige Durchgangsloch 52 in der Griffhülse 1 mit radialem Abstand durchsetzt. In der Lagerhülse 48 ist eine koaxiale Bohrung mit einem Innengewinde 53 angeordnet, in das der Gewindezapfen 44 einschraubbar ist.

Der Schaft kann sich gerade oder schräg zur Längsmittelachse der vorzugsweise geraden Griffhülse 1 erstrecken. Bei der vorliegenden Ausgestaltung ist der Schaft ein runder Stab, dessen Querschnittsgröße sich zum Arbeitskopf 42 hin kontinuierlich verjüngt. Beginnend vom Schaftfußbereich erstreckt sich der Schaft 41 zunächst schräg zur einen Seite des Handstücks 1 hin, und er ist dann zur anderen Seite hin gebogen, wobei dieser sich in der schrägen Position vorzugsweise gerade erstreckende Schaftabschnitt 41a über die Längsmittelachse 54 hinaus erstreckt, so daß der Arbeitskopf 42 sich in einem Abstand a von der Längsmittelachse 54 in schräger Position auf der anderen Seite befindet. Der Abstand a beträgt bei der vorliegenden Ausgestaltung etwa 5 mm.

Der Schaft 41 kann durch ein Rohr gebildet sein, das in ein entsprechendes Loch des Drehangriffselements 45 eingesetzt und damit verbunden ist. Der sich im Schaft 41 bzw. Rohr erstreckende Hohlkanal 27 kann im Bereich des hinteren Schaftabschnitts 41b in einer auf den Arbeitskopf 42 gerichteten Position ausmünden. Vorzugsweise erstreckt sich der Hohlkanal 27 längs durch den Schaft 41 bis in den Arbeitskopf 42 hinein, was noch beschrieben wird. Der Schaft 41 besteht vorzugsweise aus hochfestem federelastischem Material, vorzugsweise legiertem Stahl.

Wie aus den Fig. 1a, 1b und 1c zu entnehmen ist, ist der Arbeitskopf 42 ein quaderförmiger Körper mit einer Rückwand 56a, einer ihr gegenüberliegenden Vorderwand 56b und zwei einander gegenüberliegenden Seitenwänden 56c, einer Bodenwand 56d und einer Oberwand 56e, in deren Bereich vorzugsweise mittig der Arbeitskopf 42 mit dem Schaft 41 unlösbar verbunden ist, vorzugsweise durch Löten oder Schweißen. Die Querschnittsgröße des Arbeitskopfes 42 verjüngt sich vorzugsweise kontinuierlich von oben nach unten. Die beim vorliegenden Ausführungsbeispiel ebenen Umfangswände schließen dabei mit der zugehörigen Senkrechten einen Winkel von etwa 2 bis 8 Grad, insbesondere etwa 4 bis 6 Grad ein, so daß einander gegenüberliegende Wände nach unten konvergieren. Die vertikalen Kanten 57 und die Umfangskanten 58 der Bodenwand 56c sind vorzugsweise gerundet.

Für den Einsatz des Arbeitskopfes 42 im mittleren okklusalen Bereich eines Zahnes sind alle Wandflächen 56a bis 56d des Arbeitskopfes 42 mit einer Vielzahl insbesondere punktförmigen Schneiden versehen, die auf der zugehörigen Fläche verteilt angeordnet sind und bei oszillierendem Antrieb eine Präparation einer Kavität im Zahn gewährleisten. Hierbei kann es sich um geometrisch definierte oder unbestimmte Schneiden handeln. Vorzugsweise sind die Arbeitsflächen 56 mit harten adhärenten Körnern, vorzugsweise aus Diamant, Feldspat oder Keramik besetzt und somit abrasiv. Es können auch andere abrasive Arbeitsflächen 56 sein, die bei oszillierender Bewegung einen Abtrag des Zahnmaterials gewährleisten.

Bei einem insbesondere für den approximalen Bereich eingerichteten Arbeitskopf 42 ist die dem benachbarten Zahn zugewandte Fläche F glatt ausgebildet, so daß sie den benachbarten Zahn nicht beschädigen kann und eine Frei- oder Stützfläche F zur Abstützung am benachbarten Zahn bilden kann.

Dabei kann die glatte Fläche F eine der vier seitlichen Arbeitsflächen 56 sein. Vorzugsweise bildet die Rückwand 56a oder Frontwand 56b die glatte Stützfläche F. Dies ist aus Gründen der Handhabung und der geometrischen Position der zu behandelnden approximalen Zahnfläche (nach hinten oder nach vorne gerichtet) im Mundraum des Patienten vorgegeben. Aus gleichem Grund ist es auch vorteilhaft, den Arbeitskopf 42 so verdreht anzuordnen, daß die Rückfläche 56a bzw. Frontfläche 56b mit der zugehörigen vertikalen Längsebene E einen spitzen Winkel w von etwa 60 bis 80 Grad, insbesondere etwa 70 bis 75 Grad, einschließt.

Bei der Ausgestaltung des Arbeitskopfes 42 nach Fig. 2, bei der gleiche oder vergleichbare Teile mit gleichen Bezugszeichen bezeichnet sind, ist der Arbeitskopf 42a bezüglich seiner sich quer zum Schaft 41 und in der Längsrichtung seiner Mittelachse 54a erstreckenden Abmessung b vorzugsweise kleiner bemessen als seine sich quer zum Schaft 42 und quer zur Mittelachse 54a erstreckende Abmessung c, so daß er etwa die Form eines Plättchens aufweist. Bei dieser Ausgestaltung ist die Rückfläche 56a dieses Arbeitskopfes 42a glatt ausgebildet,wobei sie eben oder auch - längs des Schaftes 42 gesehen - zylinderabschnittförmig gerundet sein kann. Diese Ausgestaltung eignet sich besonders gut für eine approximale Präparation, was bereits dadurch vorgegeben ist, daß das Maß b verhältnismäßig klein bemessen ist und bei der vorliegenden Ausgestaltung nur etwa 1 bis 2 mm beträgt, während das Maß c etwa 1,5 bis 5 mm betragen kann und das sich quer zur Mittelachse 54a und längs des Schaftes 41 erstreckende Maß d etwa 3 bis 6 mm beträgt. Die Einarbeitungs- oder Vorschubrichtung 40 ist in etwa parallel zur Achse des Zahns ausgehend von dessen okklusaler Fläche gerichtet.

Vorzugsweise sind mit Ausnahme an der Oberwand 56e im Randbereich alle drei übrigen Umfangskanten der Rückfläche 56a als divergente Flächen 59, insbesondere Schrägflächen oder Hohlkehlen, an den Seitenwänden 56c und der Bodenwand 56d angeordnet, die in die Umfangskanten der Frontfläche 56b auslaufen können und wie die übrigen Arbeitsflächen 56 mit spanabhebenden Schneiden oder Partikeln besetzt sind. Dabei können die Übergänge zwischen der Rückwand 56a und den Seitenwänden 56c oder der Bodenwand 56d oder zwischen diesen und den divergenten Flächen 59 gerundet sein. Die Frontwand 56b kann bezüglich der Mittelachse 54a parallel oder etwas nach unten konvergent geneigt sein. Diese divergenten Flächen 59 erzeugen im zugehörigen Umfangsbereich der Kavität K entsprechende Randflächen KW1 am Rand der Kavitätwände KW. Der Winkel w1 der divergenten Flächen 59 kann etwa 30 bis 60 Grad, insbesondere etwa 45 Grad betragen.

Mit den divergenten Flächen 59 vergleichbare divergente Flächen können auch im Bereich der Umfangskanten der Oberwand 56e am Arbeitskopf 42 angeordnet sein, wobei in diesem okklusalen Bereich alle vier Wände 56a, 56b, 56c mit entsprechenden divergenten Flächen versehen sind.

Bei der Ausgestaltung nach Fig. 4 und 5, bei der gleiche oder vergleichbare Teile ebenfalls mit gleichen Bezugszeichen versehen sind, ist der Arbeitskopf 42b mit einer konvex gerundeten vorder- und rückseitigen Arbeitsfläche 56f versehen, wobei diese Fläche kugelabschnitt- oder halbkugelförmig ausgebildet sein kann. Die dem benachbarten Zahn zugewandte Frontfläche 56a ist dagegen als glatte Freifläche F ausgebildet. Eine solche Ausgestaltung dient vorzugsweise zur Präparation einer kleinen Kavität K, insbesondere im approximalen Bereich des Zahns. Im Übergangsbereich zwischen dem Arbeitskopf 42b und dem Schaft 41 kann ein verjüngter halsförmiger Übergang mit einer vorderseitigen Arbeitsfläche 56g vorgesehen sein, der zur Rückseite hin konvex z.B. zylinderabschnittförmig, insbesondere halbzylindrisch oder halbkonisch gewölbt ist. Ein solcher Arbeitskopf 42b weist etwa die Form einer halben Birne auf.

Bei den für eine approximale Präparation vorgesehenen Arbeitsköpfen kann die im benachbarten Zahn zugewandte glatte Fläche F - längs des und/oder quer zum Schaft 41 gesehen - im Sinne einer Hohlkehle leicht konkav gerundet sein, wobei diese konkave Rundung dem benachbarten Zahn angepaßt ist und entsprechend eines Mittelwertes gerundet ist.

Im Rahmen der Erfindung ist es auch möglich, den Arbeitskopf so flach auszugestalten, daß er im wesentlichen nur divergente Flächen 59 aufweist und somit zur Anbringung divergenter Randflächen KW1 an eine bereits vorhandene Kavität K dient. Bei kleiner Dimensionierung dieser Form ist auch die Präparation von kleinsten hohlkehlartigen Kavitäten besonders im Zahnzwischenraum bei Erstversorgung von kariösen Defekten möglich. Solche Ausgestaltungen sind in den Fig. 6 bis 11 beschrieben. Bei der Ausgestaltung nach Fig. 6 bis 8 ist ein Arbeitskopf 42c in Form einer flachen Leiste mit parallelen Seiten vorgesehen, die an ihrem freien Ende eine flache oder gerundete Stirnfläche aufweisen kann. Die bei der vorliegenden Ausgestaltung rückseitige Arbeitsfläche 56h ist zylinderabschnittförmig gerundet, wobei diese Rundung bei 56i in eine gerundete oder schräge Stirnfläche übergeht. Bei dieser Ausgestaltung bilden die Arbeitsflächen 56h, 56i die divergenten Flächen 59, wobei diese divergenten Flächen 59 auch durch schräge Flächen des leistenförmigen Arbeitskopfes 42c gebildet sein können. Wenn die Freifläche F im Sinne einer Hohlkehlung konkav gerundet ist, siehe Fig. 7, dann endet diese Hohlkehlung vor dem freien Ende des Arbeitskopfes 42c (siehe Fig. 8). so daß die stirnseitige Arbeitsfläche 56i gebildet werden kann.

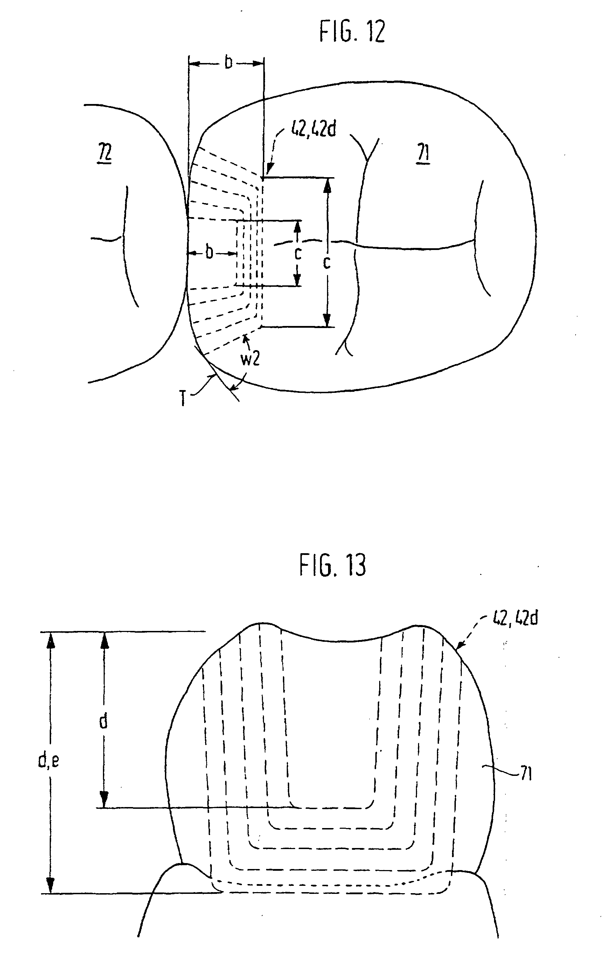

Die Ausgestaltung des Arbeitskopfes 42d nach Fig. 9 bis 11 unterscheidet sich von der nach Fig. 6 bis 8 dadurch, daß die Form der Leiste nicht parallel sondern eiförmig ausgebildet ist, wie es Fig. 11 zeigt. Da dieser Arbeitskopf 42d länglich gerundet ist, ergibt sich eine ellipsenförmige konvexe Arbeitsfläche 56k. Wie Fig. 9 beispielhaft zeigt, ist es auch bei allen vorbeschriebenen Ausführungsbeispielen möglich, die freie Fläche F - in Längs- und/oder Querrichtung gesehen - gemäß einem Mittelmaß leicht konkav zu runden.

Die Arbeitsflächen 56f bis 56k sind durch spanabhebende Schneiden oder Partikel abrasiv, z.B. diamantiert. Die Arbeitsfläche 56k kann auch als glatte Freifläche ausgebildet sein. Die Kanten können gerundet und nicht abrasiv sein.

Bei den Ausgestaltungen gemäß Fig. 6 bis 11 kann das Maß c so groß bemessen sein, daß Kavitäten K unterschiedlicher Breite mit ein und demselben Arbeitskopf 42c, 42d bearbeitet werden können, wobei die divergierenden Randflächen KW1 an den Seiten und am Grund der Kavität A gleichzeitig eingearbeitet werden können. Wenn das Maß c kleiner bemessen ist als die zugehörige Breite der Kavität K, dann bedarf es einer seitlichen Verlagerung des Arbeitskopfes 42c, 42d, um die divergenten Randflächen KW1 nacheinander einarbeiten zu können.

In allen vorbeschriebenen Ausgestaltungen gemäß Fig. 2 bis 11 können die Arbeitsfläche 56 und die Freiflächen F jeweils in die entgegengesetzte Richtung weisen, wie es die Fig. 1c, 2a, 4a und 6a zeigen. Die jeweilige Anordnung ist davon abhängig, ob eine approximale Kavität K an der nach hinten oder nach vorne gerichteten Seite eines Zahns präpariert werden soll.

Die Arbeitsflächen 56 bis 56k bestehen aus korrosionsfestem Material, wie z.B. legiertem Stahl, wobei die Arbeitsflächen mit einem Diamantbelag belegt und somit diamantisiert sind.

Bei allen vorbeschriebenen Ausführungsbeispielen ist es vorteilhaft, jeweils mehrere Arbeitsköpfe einer Grundform vorzusehen, deren Abmessungen b und/oder c und/oder d in bestimmten Stufen unterschiedlich sind. Eine solche Ausgestaltung ist durch die Fig. 12 und 13 verdeutlicht, die jeweils einen Arbeitskopf 42 bis 42d in fünf oder mehr unterschiedlichen Größen andeutungsweise zeigen. Bei einem für eine approximale Präparation vorgesehenen Arbeitskopf nimmt dabei mit größer werdender Abmessung c die sich etwa parallel zur Okklusionsfläche erstreckende Divergenz der Seitenflächen 56c zu, so daß letztere bei kastenförmigen Kavitäten mit einer Zahn-Tangente T einen am Winkel w2 von etwa 70 bis 90 Grad einschließen.

Ferner ist es vorteilhaft, für die bestimmten Größen jeweils nicht nur einen sondern mehrere, insbesondere zwei Arbeitsköpfe 42 bis 42d vorzusehen, von denen der eine Arbeitskopf für eine Grob-Vorpräparation und der andere Arbeitskopf für eine Fein- bzw. Fertigpräparation vorgesehen ist. Bei einer Diamantisierung kann diese für eine Vorpräparation etwa 60 bis etwa 80 µm und für eine Feinpräparation etwa 25 bis 40 µm betragen. Die Dimensionierung des Vorpräparationsinstruments sollte bei bestehender Diamantierung in Abhängigkeit vom Abtragungsverhalten geringfügig kleiner sein als das Feinpräparierungsinstrument. Durch die Kavität der Vorpräparation ist ein definiertes Einsenken des Feinpräparationsinstruments, eine Feinabtragung von Zahnmaterial und eine wiederholbare Kavitätenform und -größe möglich.

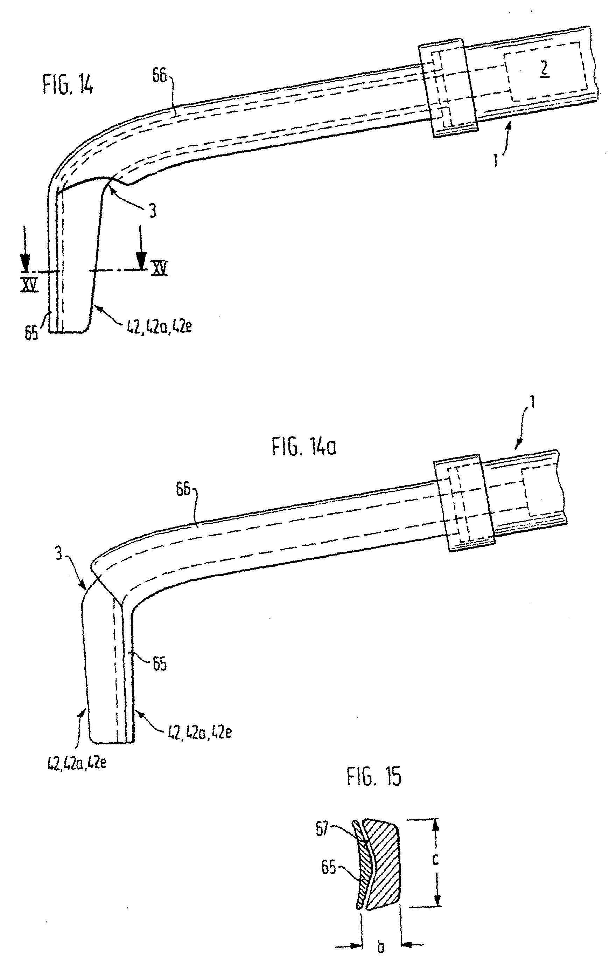

Bei der Ausgestaltung gemäß 14 bis 15, bei der gleiche und vergleichbare Teile ebenfalls mit gleichen Bezugszeichen versehen sind, ist dem für eine approximale Präparation vorgesehenen Werkzeug 3 bzw. Arbeitskopf 42a ein Schutzteil 65 zugeordnet, das sich auf dem dem Arbeitsbereich abgewandten Seite des Arbeitskopfes befindet, nämlich an der zum benachbarten Zahn hin gerichteten Seite. Bei der vorliegenden Ausgestaltung ist das Schutzteil 65 eine schmale Leiste, deren Breite vorzugsweise an die Abmessung c des Arbeitskopfes angepaßt ist, so daß die zum benachbarten Zahn weisende Seite des Arbeitskopfes im wesentlichen völlig durch das Schutzteil 65 überdeckt ist. Das Schutzteil 65 ist starr mit der Griffhülse 1 verbunden und nimmt somit an der Oszillationsbewegung nicht teil. Das Schutzteil 65 kann als Schutzleiste von einem rohrförmigen Basisteil 66 ausgehen, daß den Schaft 41 wenigstens teilweise mit einem so großen Abstand umgibt, daß der Schaft 41 und der Arbeitskopf das Basisteil 66 und das Schutzteil 65 nicht berühren. Um die approximale Abmessung so gering wie möglich zu halten, ist es vorteilhaft, das Schutzteil 65 in einer Ausnehmung des Arbeitskopfes wenigstens teilweise versenkt anzuordnen. Eine solche Ausgestaltung ist in Fig. 15 dargestellt. Dieser Arbeitskopf 42e weist eine sich in seine Längsrichtung erstreckende dreieck- oder trapezförmige Ausnehmung 67 auf, in der sich eine entsprechend geformte Schutzleiste 65 in einem geringen Abstand (Spalt) von der Ausnehmungsfläche erstreckt.

Wie bereits bei den Ausgestaltungen gemäß den Fig. 1c, 2a, 4a und 6a können auch bei dieser Ausgestaltung der Arbeitsbereich des Arbeitskopfes und das Schutzteil 65 in entgegengesetzt gerichteter Anordnung, nämlich um etwa 180 Grad verdreht, oder in einer anderen seitlichen Anordnung, siehe Fig. 1a, angeordnet sein. Das Schutzteil 65 besteht ebenfalls aus korrosionsfestem Material, insbesondere legiertem Stahl. Die Befestigung an der Griffhülse 1 kann durch ein lösbare oder unlösbare Verbindung erfolgen, z.B. eine Schraubverbindung oder mittels einer Überwurfmutter.

Als weitere Schutzvorrichtungen gegen die Beschädigung angrenzender Zahnflächen können Teilbeschichtungen oder "Einlagen" auf den Werkzeugflächen dienen, deren Materialeigenschaften wie z.B. Härte oder Abrasivität Zahnsubstanz oder Restaurationsmaterial nicht beschädigt, z.B. Kunststoff wieTeflon.

Im folgenden werden die Versorgung eines kariösen Defektes und/oder eine vorbestehende Restauration eines Zahnes 71 im approximalen Bereich anhand der Fig. 16 bis 22 beschrieben. Der kariöse Defekt und/oder eine vorbestehende Restauration werden durch die Präparation der Kavität K entfernt und zwar vom okklusalen Bereich her. Diese Präparation kann mit einem Arbeitskopf 42a erfolgen, der beim vorliegenden Unterkieferzahn bei oszillierendem Werkzeug 3 von oben eingesenkt wird. Dabei kann der Antriebskopf 42a sich mit seiner Freifläche F am benachbarten Zahn 72 abstützen, ohne daß die Gefahr einer Beschädigung des Zahns 72 besteht, da lediglich eine geringe Reibungsbelastung auftritt. Anstelle der Präparation mit einem erfindungsgemäßen Arbeitskopfs 42a kann auch eine Vorpräparation mit einem herkömmlichen Rotationswerkzeug 73 eingearbeitet werden. wie es Fig. 16 zeigt. Vorsorglich kann - wenn möglich - diese Votpräparation bis auf eine dünne approximale Restwand 74 ausgeführt werden, um den Zahn 72 nicht zu beschädigen. Dann wird diese Vorpräparation hinsichtlich ihrer Breite, Länge und Tiefe bemessen, um die richtige Größe für eine nachfolgende Grob- und/oder Feinpräparation mit einem erfindungsgemäßen Antriebskopf der richtigen Größe auswählen zu können. Hierzu eignet sich vorteilhaft ein Meßwerkzeug 75, das weiter unten noch beschrieben wird. Sofern die Vorpräparation ohne Restwand 74 erfolgt, kann die Nachbarzahnfläche mit einem dünnen Stahlmaterialband geschützt werden und die betreffende Breite der vorpräparierten Kavität K bis zum Zahn 72 gemessen werden und ein gewünschter approximaler Sicherheitsabstand berücksichtigt werden. Das Werkzeug mit dem passenden Antriebskopf 42a ist in Fig. 17 andeutungsweise dargestellt. Der Antriebskopf 42a ist hinsichtlich seiner Abmessungen b, c und d etwas größer bemessen als die Vorpräparation, so daß die fertige Kavität K unter Berücksichtigung des sich ergebenden Spiels S bezüglich ihrer Form und Größe der Form und Größe des Arbeitskopfes 42a entspricht, soweit der Antriebskopf 42a in den Zahn 71 eintaucht.

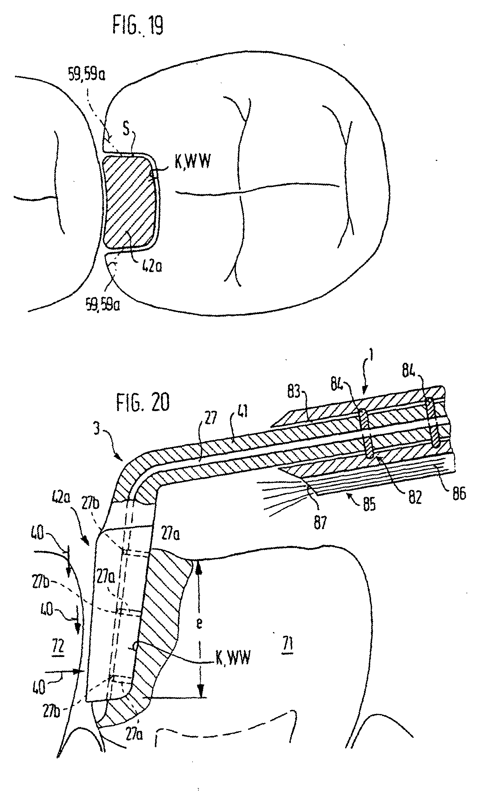

Die Fig. 19 und 20 zeigen den Antriebskopf 42a ohne divergente Flächen 59, die beim vorliegenden Ausführungsbeispiel mit Arbeitsköpfen 42c, 42d nachgearbeitet werden können. Die Ausführung der Feinpräparation mit und ohne divergente Flächen ist von der späteren Versorgungstechnik abhängig.

Die Antriebsköpfe 42 bis 42e können vom gemeinsamen Zuführungskanal 25 abzweigende Kanalzweige 25a, 25b, 25c auf, die an den Arbeitsflächen ausmünden und im Oszillationsbetrieb den Arbeitskopf und das Zahnmaterial kühlen sowie abgearbeitete Partikel wegspülen.

In Fig. 20 ist die Griffhülse 1 außerdem mit einer andeutungsweise dargestellten Steckkupplung 82 ausgeführt, bestehend aus einem Steckloch 83 zum Einstecken des Schaftes 41 und und wenigstens einem selbsttätig beim Einstecken in Kupplungsausnehmungen des Schaftes 41 einrastenden und beim Herausziehen wenigstens einem selbsttätig ausrastenden Kupplungselement 84. Ferner weist die Griffhülse 1 an ihren vorderen Ende eine Beleuchtungseinrichtung 85 zur Beleuchtung der Behandlungsstelle auf, vorzugsweise in Form eines sich in oder an der Griffhülse 1 längs erstreckenden Lichtleiters 86, dessen Lichtaustrittsfläche 87 auf die Behandlungsstelle gerichtet ist.

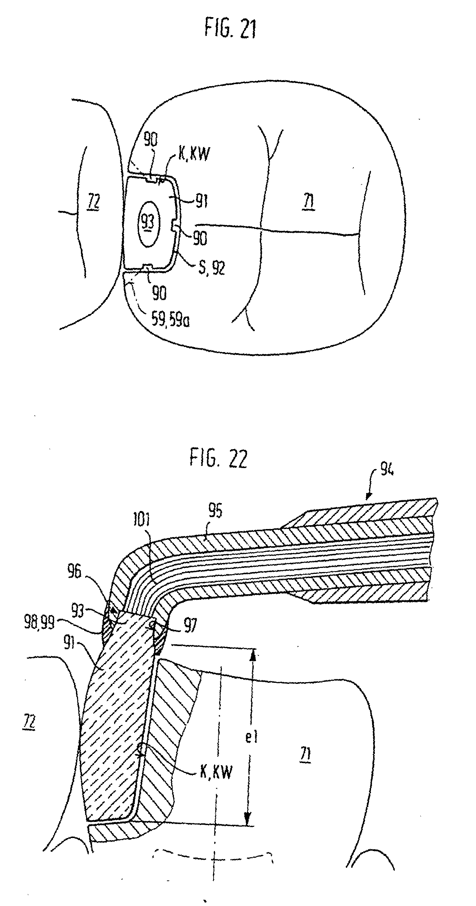

Nach ggf. nochmaliger Vermessung der Tiefe e der Kavität erfolgt die Auswahl eines von mehreren zur Verfügung stehenden vorgefertigten, zum jeweiligen Verbundsystem mit Dentalsubstanz vorbereiteten Inserts 91 unter Berücksichtigung des zuletzt benutzten Arbeitskopfes und ggf. der Tiefe e der Kavität K. Nach Reinigung und ggf. weiteren üblichen Vorbehandlungsmaßnahmen sowie Auftrag eines geeigneten Verbindungsmittels 92 auf die Kavitätwände KW kann das Insert 91 gemäß Fig. 21 und 22 in die Kavität K eingesetzt und in üblicher Weise durch das Verbindungsmittel 92 mit dem Zahn 71 verbunden werden. Zwecks Verbesserung des Austritts überschüssigen Verbindungsmaterials können in den Anlageflächen des Inserts 91 Ablaßrillen 90 angeordnet sein, die sich vorzugsweise zum okklusalen Bereich hin erstrecken.

Das vorgefertigte Insert 91 kann aus Metall oder Kompositkunststoff oder einem licht durchlässigem Material wie z.B. Glas, Quartz oder Keramik bestehen. Die sich längs der Zahnachse erstreckende Abmessung e1 des Inserts kann aus verschiedenen Gründen unterschiedlich bemessen sein. Falls nach der festen Einsetzung des Inserts 91 ein okklusaler Aufbau auf dem Insert 91 ggf. auch für weitere Bereiche des Zahnes 71 beabsichtigt ist, kann das Maß e1 kleiner bemessen sein als die Tiefe e der Kavität K. Anderenfalls ist das Maß e1 etwas größer zu bemessen als die Tiefe e, so daß der okklusale Endbereich des eingesetzten Inserts 91 bezüglich Abmessung und Form an eine gewünschte vorgegebene Okklusalform spanabhebend vor oder nach der Befestigung angepaßt werden kann.

Da das Insert 91 im von den Kavitätwänden KW umschlossenen Bereich passend vorgefertigt ist, bedarf es in diesem Bereich keiner Anpassung. Die approximale Fläche 91a des Inserts ist ebenfalls vorgefertigt, wobei ihre Form und Abmessung idealisiert sein kann. Bei allen Ausgestaltungen können das Werkzeug 42 und das Insert 91 divergente Flächen 59 bzw. Anlageflächen 59a aufweisen, wie es in den Fig. 19 und 21 andeutungsweise dargestellt ist.

Beim Ausführungsbeispiel nach Fig. 21 und 22 wird ein Insert 91 verwendet, das an seinem okklusalen Ende einen die Tiefe e der Kavität K überragenden Applikationsansatz 93 einer bestimmten Querschnittsform und -größe aufweist, der vorzugsweise einstückig bei der Vorfertigung angeformt ist. Der Applikationsansatz 93 ermöglicht die Handhabung und Bearbeitung des Inserts 91 mit einem besonderen Handstück 94, dessen vorderer Bereich in Fig. 22 im Längsschnitt dargestellt ist. Dieses Handstück 94 weist die Form eines schlanken Stabes auf, der an seinem vorderen Ende einen Funktionsarm 95 mit einem seitlichen Adaptionsteil 96 fiir den Applikationsansatz 93 aufweist. Bei der vorliegenden Ausgestaltung ist das Adaptionsteil 96 durch ein passendes Aufnahmeloch 97 für den Adaptionsansatz 93 und ein Klemmelement 98 zum Halten des Adaptionsansatzes 93 bzw. Inserts 91 am Adaptionsteil 96. Das Klemmelement 98 kann durch eine oder zwei einander gegenüberliegende Lippen oder eine Ringlippe 99 aus elastischem Material wie Kunststoff oder Gummi bzw. Hartgummi gebildet sein. Die Klemmwirkung wird dadurch erzielt, daß die von der oder den Lippen 99 begrenzte Öffnung im Querschnitt kleiner bemessen ist, als der Adaptionsansatz 93, so daß im eingesteckten Zustand eine Klemmwirkung vorliegt. Vorzugsweise ist der Funktionsarin 95 durch einen Antrieb im Handstück 94 oszillierend antreibbar, wodurch das Insert 91 durch Vibrationsübertragung forciert eingesetzt werden kann.

Im weiteren kann ein Funktionsarm 95 an seinem freien Endbereich eine Lichterzeugungseinrichtung oder einen Lichtleiter 101 aufweisen. Mit diesen Mitteln ist es möglich, bei einem Insert 91 aus lichtdurchlässigem Material Licht der Kavitätswandung KW von der Lichterzeugungseinrichtung oder vom Lichtleiter 101 durch den Applikationsansatz 93 - oder falls ein solcher nicht vorhanden ist - direkt von oben in das lichtdurchlässige Insert 91 und somit zur Kavitätswandung KW zuzuführen. um ein licht- oder dualhärtendes Verbindungsmittel 92, z.B. Feinhybridkomposit zu härten.

Der Applikationsansatz 93 wird nach Aushärtung spanabhebend unter Berücksichtigung der vorgegebenen Paßform abgearbeitet.

Es ist im Rahmen der Erfindung im weiteren vorteilhaft, für jede Größe oder gängige Größen mehrere Inserts 91 unterschiedlicher Färbung bereitzuhalten, um das Insert 91 nicht nur hinsichtlich seiner Größe sondern auch seiner Färbung gezielt auswählen und an gegebene Zahnfarben anpassen zu können.

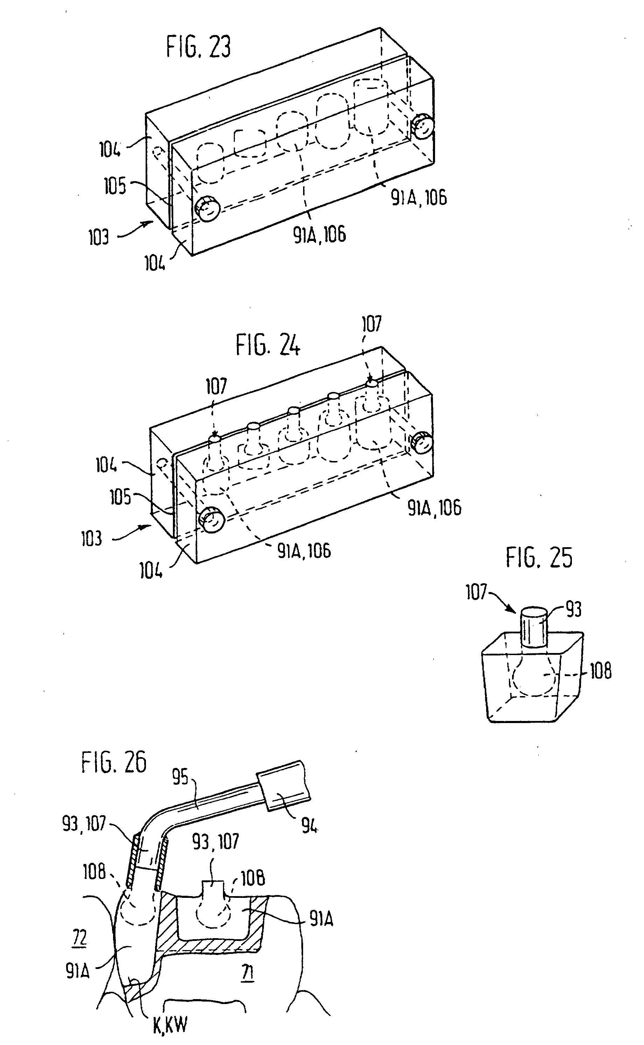

Es ist im Rahmen der Erfindung im weiteren möglich und vorteilhaft, ein Insert 91A am vorhandenen Arbeitsplatz zu gießen oder zu pressen, wobei durch Mischung oder Auswahl des Gieß- oder Pressmaterials eine passende Farbe für das Insert 91A geschaffen werden kann. Hierzu ist gemäß Fig. 23 und 24 eine Gießform 103 mit zwei Formteilen 104 vorgesehen, in der im Bereich der Teilungsfuge 105 wenigstens eine, vorzugsweise mehrere Formkammern 106 der durch die Form und Größe der vorhandenen Arbeitsköpfe vorbestimmten Form und Größe vorhanden sind. Die Formteile 104 sind durch geeignete Mittel gegen einander verspannbar, z.B. durch Schrauben. Des weiteren ist wenigstens ein Gefäß mit einem plastischen Gieß- oder Pressmaterial zum Gießen/Pressen des Inserts 91A vorgesehen. Ggf. können mehrere Gefäße mit Gieß-Pressmaterialien unterschiedlicher Färbung (z.B. lichthärtende Füllungskompositmaterialien, die nach dem Einpressen in die Negativform in einem geschlossenen System/Kammer mit Licht und/oder Hitze und/oder Druck nachvergütet werden können, vorhanden sein, so daß durch Auswahl des Gefäßes dem Insert 91A eine bestimmte Farbe zugeordnet werden kann. Nach Auswahl der bestimmten Größe des Inserts 91A unter Berücksichtigung der Größe des Arbeitskopfes wird das Gieß-Pressmaterial in den ausgewählten Formraum 106 entsprechender Größe und Form unter Druck eingegeben, was durch einen zugehörigen Kanal in der Gießform 103 erfolgen kann. Nach Aushärtung des so geformten und an die Größe und Form des benutzten Arbeitskopfes bzw. der Kavität K angepaßten Inserts 91A kann es in die zugehörige Kavität eingesetzt und weiter verarbeitet werden.

Bei den vorbeschriebenen Maßnahmen kann ein Applikationsansatz 93 im vorbeschriebenen Sinne mitgeformt werden, wenn der oder die zugehörigen Formkammern 106 auch eine dem Applikationsansatz 93 entsprechende Form aufweisen.

Es ist im Rahmen der Erfindung auch möglich, den Applikationsansatz 93 durch einen vorgefertigten Kern 107 zu bilden, der aus dem Applikationsansatz 93 und einem Verankerungsabschnitt 108 besteht und in der zugehörigen Formkammer 106 vor dem Gießen so angeordnet wird, daß der Verankerungsansatz 108 in die Formkammer 106 hineinragt und mit dem Gießmaterial umformt werden kann. Zur Aufnahme des Kerns 107 in der Gießform 103 sind entsprechende Ausnehmungen vorgesehen, in die der Kern mit seinem Applikationsansatz 93 eingesetzt werden kann.

Das Meßwerkzeug 75 weist zwei Meßstifte 111 auf, die sich parallel zueinander erstrecken und eine Länge aufweisen, die größer ist als die größte Tiefe e einer Kavität K. Die Querschnittsgröße der insbesondere runden Meßstifte 111 ist vorzugsweise kleiner bemessen als die kleinstmögliche Querschnittsgröße einer Kavität K, so daß große und kleine Kavitäten ausgemessen werden können. Die Meßstifte 111 sind jeweils an einem Meßarm 112 angeordnet, die in einer Führung 113 aufeinander zu und voneinander weg bewegbar geführt sind. Dabei erstrecken sich die Meßstifte 111 von den Meßarmen 112 in Richtung der Längsachse 114 des Meßwerkzeugs 75 gesehen etwa rechtwinklig zur Führungsebene E1. Quer zur Längsmittelebene E2 des Meßwerkzeugs 75 gesehen, schließen die Führungsstifte 112 mit der Führungsebene E1 oder den Meßarmen 112 einen Winkel W3 von etwa 70 bis 135 Grad, vorzugsweise etwa 90 bis 110 Grad, ein. Bei der vorliegenden Ausgestaltung wird die Führung 113 durch ein Gelenk 115 gebildet, in dem die beiden Meßarme 112 miteinander verbunden sind und das durch die zugehörige Schwenkebene die Führungsebene E1 vorgibt. Bei der vorliegenden Ausgestaltung ist das Gelenk 115 an den Meßstiften 111 abgewandten Ende der Meßarme 112 angeordnet. Zwischen den Meßarmen 112 ist eine Feder 116, insbesondere eine Druckfeder angeordnet, die die Meßarme 112 in eine ihrer Endstellungen, hier in ihre gespreizte Endstellung, vorspannt. Außerdem ist zwischen den Meßarmen 112 eine Meßeinrichtung 117 mit einer Skala 118 angeordnet, die ein Ablesen des jeweils gemessenen Maßes der Kavitation ermöglicht. Eine zweite Meßeinrichtung 119 ist einem oder jeweils beiden Meßstiften 111 zugeordnet. Auch diese Meßeinrichtung 119 weist eine Skala 121 am zugehörigen Meßstift 111 auf, mittels der die Tiefe e der Kavität K abgelesen werden kann, wie es in Fig. 18 dargestellt ist. Es ist auch möglich, vorzugsweise in Kombination mit der Skala 121 ein Klemmteil, insbesondere einen Klemmring 122 auf dem zugehörigen Meßstift 111 anzuordnen, der verschiebbar und somit bei auf dem Kavitätsgrund aufgesetzten Meßstift 111 an die Okklusionsfläche des Zahns 71 schiebbar ist. Auf diese Wiese kann entweder direkt durch Vergleich der Skala 121 mit der Okklusionsfläche oder mit dem Klemmring 122 oder durch ein Ausmessen des Abstandes des Klemmrings 122 vom freien Ende des Meßstiftes 111 die Tiefe e ermittelt werden.

Bei der Erstversorgung von inwendig im Zahn liegenden kariösen Defekten kann die Eröffnung der Zahnaußenfläche entweder direkt mit den oszillierenden Instrumenten oder nach Vorpräparation mit rotierenden Bohrern, die von der Größe her abgestimmt sind, d.h kleiner sind als die oszillierenden Instrumente, erfolgen.

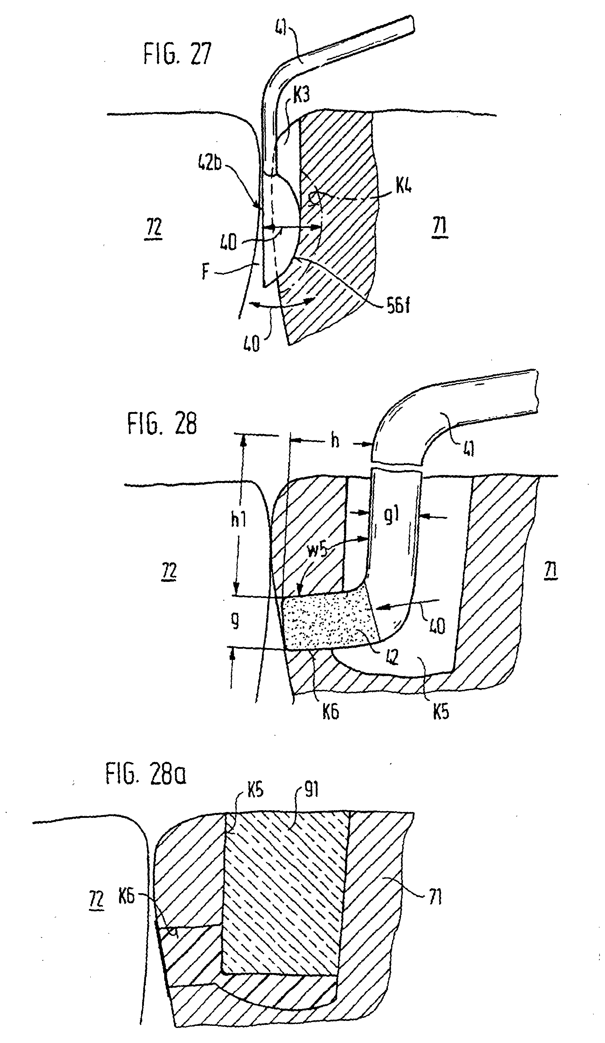

Bei der Ausgestaltung gemäß Fig. 27 wird ein birnen-bzw. linsenförmiges Werkzeug 42b gemäß Figuren 4 bis 5 dazu benutzt, einen approximalen primären kariösen Defekt zu versorgen. Wie bereits bei den vorbeschriebenen Ausführungsbeispielen kann das Werkzeug 42b mit oder ohne Halsfläche 56g ausgeführt sein. Bei längs- oder querovaler Ausdehnung der Karies auf der approximalen Außenfläche des Zahnes 71 kann mit dem Arbeitskopf 42b von bukkal, von lingual oder von okklusal her eine verhältnismäßig kleine Kavität K3 gestaltet werden, wobei ggf. mit einem kleineren rotierenden Werkzeug vorgearbeitet werden kann. Der Arbeitskopf 42b kann somit eingesenkt und zum approximalen Schmelzdefekt geführt werden. Die seitliche Abrasivität ist für die Substanzabtragung ausreichend. Eine Beschädigung des benachbarten Zahns 72 ist durch die freie Fläche F verhindert. Es entsteht zunächst das Abbild des Arbeitskopfes 42b auf der Außenfläche des Zahnes 71. Sind die Entkalkungszonen der Karies seitlich weiter ausgedehnt, kann durch ein horizontales Einsenken des Arbeitskopfes 42b oder durch ein Schwenken desselben im Gegenuhrzeigersinn (siehe Doppelpfeile) die Entkalkungszone in die Präparation mit einbezogen werden, wodurch sich die andeutungsweise dargestellte Kavität K4 einbringen läßt. Danach kann der Arbeitskopf 42b in die Kavität K3 zurückgezogen und dann nach außen entfernt werden. Hierdurch wird die okklusale Eröffnung auf ein Minimum reduziert. Die Versorgung der Kavitäten kann in an sich bekannter Weise erfolgen.

Bei den Ausgestaltungen gemäß den Figuren 28 und 28a, bei denen gleiche oder vergleichbare Teile bzw. Elemente ebenfalls mit gleichen Bezugszeichen versehen sind, erfolgt die Sanierung eines insbesondere primären approximalen kariösen Defektes durch eine okklusale oder auch seidiche bzw. linguale oder bukkale Kavität K5 hindurch, so daß eine Zerstörung des Zahnschmelzes im Bereich der von der Karies nicht befallenen approximalen Zahnfläche soweit wie möglich verhindert wird. Diese Maßnahme eignet sich insbesondere dann, wenn der zu behandelnde Zahn 71 bereits eine okklusale, linguale oder bukkale Präparation erhalten hat, so daß eine vorhandene ggf. freizumachende Kavität K5 für diese Kavität K6 ausgenutzt werden kann.

Bei dieser Ausgestaltung ist das Werkzeug 3 winkelförmig oder Z-förmig geformt, wobei der Arbeitskopf 42 durch den freien Endschenkel der Winkel- oder Z-Form gebildet ist. Die Querschnittsform des Arbeitskopfes 42 kann kreisrund oder in vertikaler oder horizontaler Richtung oval sein. Der zwischen dem Schaft 41 und dem Arbeitskopf 42 eingeschlossene Winkel w5 ist vorzugsweise ein geringfügig stumpfer Winkel und kann etwa zwischen 90° und etwa 110° betragen. Die Querschnittsabmessung g des Arbeitskopfes 42 kann etwa 0,8 bis 2 mm betragen. Für kleine Kavitäten K6 beträgt die Querschnittsabmessung g etwa 0,8 bis 1,2 mm. Demgegenüber ist die Querschnittsabmessung g1 des insbesondere im Querschnitt runden Schaftes 41 etwa gleich oder etwas kleiner bemessen. Die Länge h des Arbeitskopfes 42 kann etwa 1 bis 3 mm betragen, vorzugsweise etwa 1,5 bis 2 mm. Die Länge h1 des bei einem Z-förmigen Werkzeuges 3 mittleren Schaftabschnittes 41a ist so groß zu bemessen daß approximale Defekte auch im tieferen Bereich des Zahnes erreicht werden können, so daß ein und dasselbe Werkzeug 3 für unterschiedlich tief liegende kariöse Defekte eingesetzt werden kann. Vorzugsweise beträgt die Länge h1 etwa 5 bis 10 mm. Der vorzugsweise stumpfe Winkel zwischen den Schaftabscnitten 41a und 41b kann den Ausgestaltungen gemäß Fig. 1 bis 4a entsprechen und beträgt vorzugsweise etwa 90 bis 120°. Die Querschnittsgröße des Arbeitskopfes 42 kann zu seinem freien Ende hin geringfügig konvergent sein, um den Rückzug nach innen aus der Kavität K6 zu erleichtern. Da jedoch die Querschnittsgröße der Kavität K6 vorzugsweise größer ausgeführt werden kann, ist die vorgenannte konvergente Form des Arbeitskopfes 42 nicht unbedingt erforderlich. Der Arbeitskopf ist an seiner Umfangsfläche und an seiner Stirnfläche abrasiv.

Die Querschnittstiefe und -größe der Kavität K5 ist so groß zu bemessen, daß das Werkzeug 3 mit dem Arbeitskopf 42 handhabungsfreundlich eingeführt werden kann.

Fig. 28a zeigt den versorgten Defekt, wobei die Kavitäten K5 und K6 mit dem gleichen Material oder mit unterschiedlichen Materialien verfüllt und somit versorgt werden können. Zum Füllen eignen sich plastisch applizierte, mittelviskose Materialien, z.B. Komposite und Kompionomere. Es ist möglich, die größere Kavität K5 mit einem im Querschnitt mehreckigen oder runden Arbeitskopf 42 gemäß den Figuren 1 bis 1b zu erarbeiten, z.B. nach einer vorherigen Eröffnung mittels eines herkömmlichen rotierenden Bohrers. Es ist auch von Vorteil, die Kavität K5 mit einem Insert 91 zu versorgen, dessen Querschnittsform und -größe im erfindungsgemäßen Sinne an die Querschnittsform und -größe des Arbeitskopfes 42 (siehe z.B. Fig. 1a und 1b) angepaßt ist.

Vorbeschriebene Werkzeuge lassen sich auch sehr vorteilhaft zur Beseitigung eines Furkationsbefalls verwenden, der bei paradontalem Knochenschwund an ein- oder mehrwurzligen Zähnen anfällt und bei teilweise oder ganz geöffneten Furkationen Verschmutzungen, Zahnsteinbefall und Bakterienherde umfaßt. Ein solcher Furkationsbefall läßt sich mit den erfmdungsgemäßen Werkzeugen 3 sehr gut entfernen, wobei in solchen Fällen, in denen Nachbarflächen unbehandelt bleiben sollen, Werkzeuge 3 mit einer Freifläche F eingesetzt werden können, so wie es z.B. im approximalen Furkationsbereich oder im Furkationsbereich von mehrwurzligen Zähnen der Fall ist.

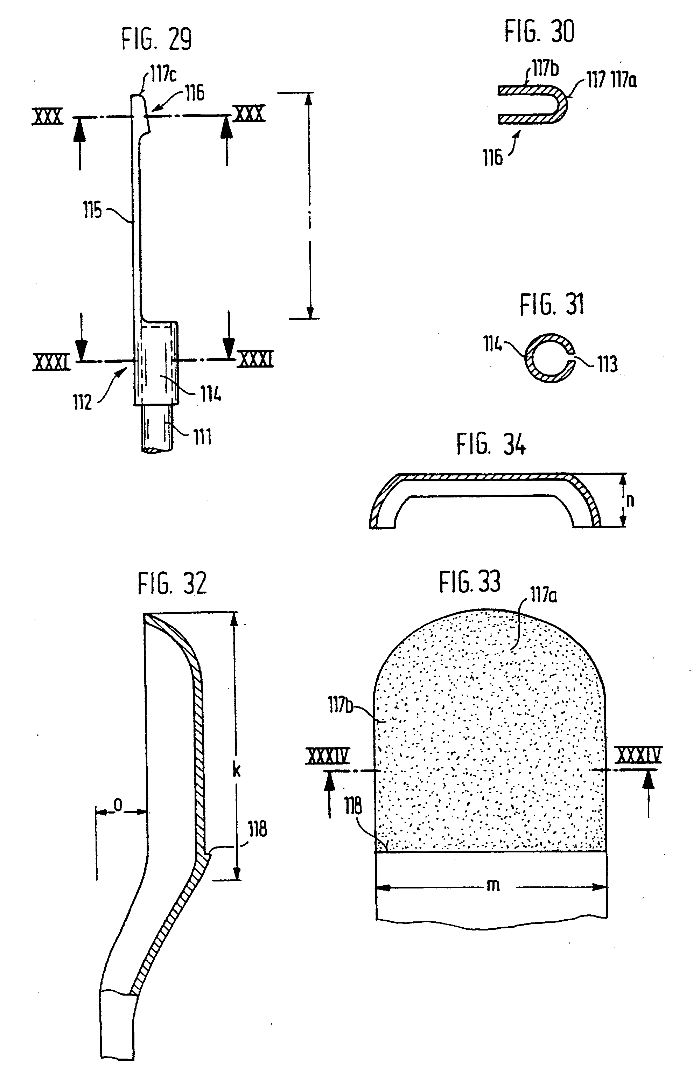

Die Figuren 29 bis 36 zeigen Werkzeugausgestaltungen, die sich vorzugsweise zum Entfernen von Furkationsbefall eignen.

Bei der Ausgestaltung gemäß Fig. 29 bis 31 besteht das Werkzeug 3 aus einem Verbindungsteil zum Verbinden mit einem andeutungsweise dargestellten Halte- und Antriebsteil 111 eines Handstücks, wobei das Antriebsteil 111 in der Längsrichtung des Werkzeugs 3 oszillierend angetrieben ist. Hierbei kann es sich um kurze Schwingungen handeln, die von einem Schwingungserzeuger 2 erzeugt werden, oder es kann sich auch um längere Hin- und Herbewegungen handeln, wie es an sich bei Handstücken für Feilwerkzeuge zur Wurzelkanalbehandlungoder dergleichen der Fall ist.

Bei der vorliegenden Ausgestaltung wird das Verbindungsteil durch ein hülsenförmige Klemmspange in Form eines längs durch einen Schlitz 113 geschlitzten Röhrchens 114 gebildet, das auf ein Antriebsteil entsprechender Querschninsfonn, vorzugsweise zylindrisch, aufsteckbar ist und durch Klemmspannung darauf gehalten wird. Von der Klemmspange 112 erstreckt sich ein flacher Schaft 115 gerade oder seitlich gekröpft nach vorne, an dessen freiem Ende ein Arbeitskopf 116 angeordnet ist. Der Schaft 115 ist seitlich elastisch biegbar. Vorzugsweise ist das Werkzeug 3 als Stanz- Biegeteil aus einem einstückigen Zuschnitt geformt, wobei die Klemmspange 112 gebogen und der Arbeitskopf 116 tiefgezogen ist, vorzugsweise zu der Seite hin, zu der die Klemmspangenarme der Klemmspange 112 gebogen sind. Das Werkzeug 3 besteht vorzugsweise aus einem harten Metall, insbesondere legiertem Stahl.

Die konvexe Außenfläche 117 des Arbeitskopfes 116 ist im bereits beschriebenen Sinne mit einer Vielzahl, insbesondere punktförmiger Schneiden versehen, die verteilt angeordnet sind und vorzugsweise aus harten adhärenten Körnern bestehen, vorzugsweise aus Diamant, Feldspat oder Keramik, so daß der Arbeitskopf 116 an seine Arbeitsfläche 117 abrasiv ist und einen Abtrag gewährleistet.

Es können die Kopffläche 117a und die Seitenflächen 117b des konvexen Arbeitskopfes 116 entsprechend abrasiv ausgebildet sein. Es können auch die vorderen und hinteren Stirnflächen 117c entsprechend abrasiv ausgebildet sein. Die Kopffläche 117a geht gerundet in die anderen übrigen Arbeitsflächenabschnitte über. Die Querschnittsform des Arbeitskopfes 116 kann dabei flachgerundet oder halbkreisförmig gerundet sein. Die vom Verbindungsteil vorragende Länge i des Werkzeuges 3 kann etwa 10 bis 30 mm, insbesondere etwa 15 bis 20 mm betragen.

Bei der Ausgestaltung gemäß der Figuren 32 und 33 weist der Arbeitskopf 116 vorzugsweise in seinem hinteren Endbereich eine sich quer erstreckende Arbeitskante 118 auf, die sich nur im Bereich der Kopffläche 117a oder auch im Bereich der Seitenflächen 117b erstrecken kann und eine Stufenkante sein kann, die aus dem Material des Arbeitskopfes 42 besteht oder durch einen Belag aus den vorgenannten abrasiven Werkstoffen gebildet sein kann.

Die Länge k des auf seinen Arbeitsflächen diamantierten Arbeitskopfes 42 kann etwa 1,5 bis 5 mm, vorzugsweise etwa 2,5 mm betragen. Dies gilt auch fiir die Breite m, die beim vorliegenden Ausführungsbeispiel etwas 2 mm beträgt. Bei der vorliegenden flachen Ausbildung des Arbeitskopfes 42 beträgt die Dicke n etwa 0,5 bis 2 mm, vorzugsweise etwa 0,75 mm. Sofern der Arbeitskopf 116 bezüglich des Schaftes 115 seitlich versetzt ist, kann dies Versetzungsmaß o etwa 0,5 bis 3 mm betragen, insbesondere etwa 0,75 bis 1 mm.

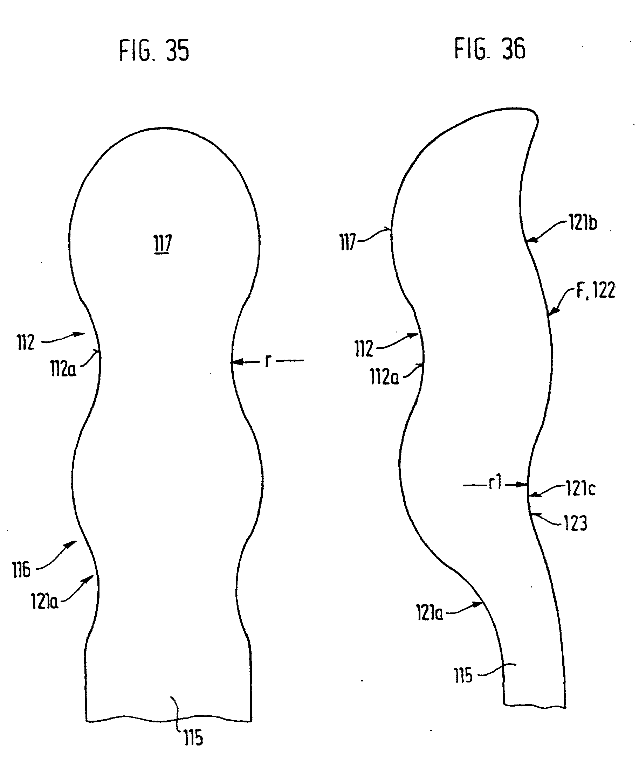

Bei der Ausgestaltung gemäß Figur 35 und 36, bei der gleiche oder vergleichbare Teile mit gleichen Bezugszeichen bezeichnet sind, weist der Antriebskopf 116 an seiner seitlichen Arbeitsfläche wenigstens eine sich quer erstreckende Taille 112 auf, deren Taillenfläche 121a gerundet ist. Der Radius r dieser Rundung ist vorzugsweise etwas größer zu bemessen, als der Radius der zu bearbeitenden Zahnform. Hierdurch wird die abrasive Bearbeitung der Zahnfläche insbesondere im Wurzelbereich einer Furkation wesentlich vereinfacht, weil die Zahnflächenteile vor und hinter vorhandenen Rundungen besser erreicht werden können und das Werkzeug 3 weniger bewegt werden muß, um diese Flächenbereiche zu erreichen. Wie aus Fig. 35 zu entnehmen ist, ist bei einer Blickrichtung auf die Arbeitsfläche 117 das Kopfende des Arbeitskopfes 116 gerundet, vorzugsweise halbkreisförmig gerundet, wobei diese Rundung in die Taille 121 übergeht. Des weiteren ist in einem axialen Abstand von der Taille im Anfangsbereich des Arbeitskopfes 116 eine "halbe" Taille 121a vorhanden, die eine zum Schaft 115 hin gerichtete Querschnittsverjüngung bildet. Im Querschnitt kann dieser Antriebskopf 116 flach gemäß den Figuren 32 bis 34 oder gerundet, insbesondere halbrund mit flacher Rückseite oder insgesamt rund, insbesondere kreisrund ausgebildet sein. Dabei kann die in Fig. 36 ersichtliche Rückseite eine nicht-abrasive glatte Freifläche F oder wie bereits die übrigen Kopf- und Seitenflächen 117a, 117b in vorbeschriebenem Sinne abrasiv ausgebildet seien. Wie Fig. 36 ebenfalls zeigt, ist bei der vorliegenden Ausgestaltung die der Kopflängsfläche 117a gegenüberliegende Rückfläche 122 schlangenförmig bzw. S-förmig gewellt, wobei zwei weitere einseitige Taillen 121b, 121c gebildet sind, die zu der Taille 121 axial versetzt sind, so daß der Taille 121 an der Rückfläche 122 eine gerundete Erhebung gegenüberliegt. Die Rundungsflächen 123 dieser Taillen 121b, 121c und der dazwischen befindlichen gerundeten Erhebung können einen gleichen oder vorzugsweise einen etwas größeren Radius r1 als der Radius r der Taillen 121, 121a aufweisen, wodurch bei einer abrasiven Rückfläche 122 durch wahlweisen Einsatz der Kopflängsfläche 117a oder der Rückfläche 122 eine Anpassung an unterschiedlich große Zahnquerschnitte möglich ist.

Die abrasiven Arbeitsflächen dieses Arbeitskopfes 116 sind vorzugsweise diamantiert. Die Diamantierung beträgt 40,15,2 bis 4 µm.

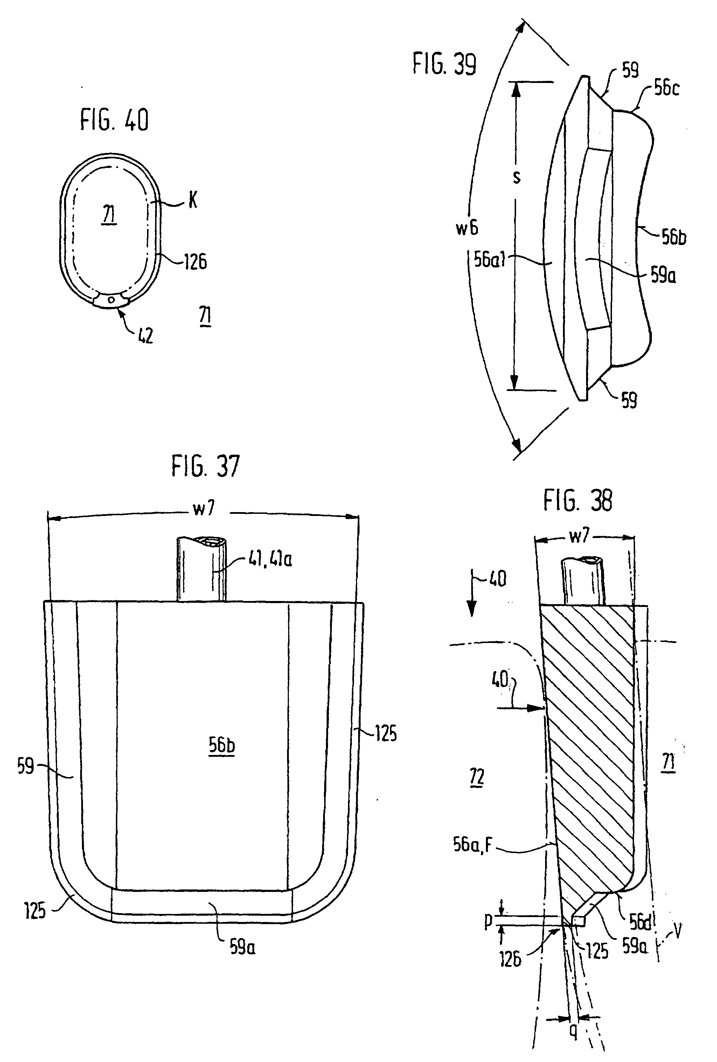

Die in den Figuren 37 bis 39 dargestellte Ausgestaltung eines Arbeitskopfes 42 des Werkzeuges 3 ist eine Weiterbildung der Ausgestaltung nach den Fig. 2, 2a und 3, wobei gleiche oder vergleichbare Teile mit gleichen Bezugszeichen versehen sind. Diese Ausgestaltung unterscheidet sich von der vorbeschriebenen durch folgende Einzelheiten:

Zunächst ist zu erklären, daß dieser Arbeitskopf 42 zweck einfacherer Darstellung in einer Stellung dargestellt ist, in der er im Vergleich mit seiner im Mundraum realen Stellung geringfügig im Gegenuhrzeigersinn gekippt ist, was durch die mit V bezeichnete Mittellinie verdeutlicht wird, die die Vertikale darstellen soll, die sich parallel zu der theoretischen vertikalen Mittelachse des zu behandelnden Zahnes 71 erstreckt. In der realen Stellung befindet sich die freie Fläche F in einer etwa vertikalen Position, je nach dem, wie der Zahnarzt den Arbeitskopf 42 positioniert.

Ein erster Unterschied besteht darin, daß der Arbeitskopf 42 - in der Draufsicht oder Unteransicht gemäß Fig. 39 gesehen - in etwaiger Anpassung an die Umfangsform des Zahnes 71 gekrümmt ist, wodurch sich eine konkav gekrümmte Frontfläche 56b ergibt.

Diese geht gerundet in die Seitenflächen 56c über, an die sich an allen drei vorhandenen Seiten (seitlich und unten) die divergenten Flächen 59 anschließen. Entsprechend gekrümmt verläuft auch der von der Bodenfläche 56d ausgehende divergente Flächenabschnitt 59a, wodurch dieser Randflächenabschnitt der Kavität K ebenfalls an die Krümmung der Zahnaußenfläche etwa angepaßt ist. Die Rückfläche 56a ist ebenfalls grundsätzlich entsprechend gekrümmt. Bei der vorliegenden Ausgestaltung weist die Rückfläche 56a einen ebenen Rückflächenteil 56a1 auf, der sich im mittleren Bereich des Arbeitskopfes 42 (siehe Fig. 38) über die gesamte Höhe des Arbeitskopfes erstreckt, jedoch in den seitlichen Bereichen aufgrund der Krümmung der Rückfläche 56a nur über Teilbereiche, wie sich aus Fig. 39 entnehmen läßt. Durch die konkave Krümmung der Front- bzw. Arbeitsfläche 56b wird dem zu präparierenden Zahn 71 weniger Zahnsubstanz entnommen, was zur Stabilität des Zahnes beiträgt.

Ein weiterer Unterschied besteht darin, daß wenigstens an der Unterseite des Arbeitskopfes 42, bei der vorliegenden Ausgestaltung auch an den Seitenflächen, ein schmaler Steg 125 geringfügig nach unten bzw. seitlich vorsteht, hier um das Maß p von etwa 0,2 bis 05 mm, an dem die divergenten Flächen 59 enden. Die Dicke q des Stegs 125 beträgt etwa 0,1 bis 0,4 mm, vorzugsweise etwa 0,2 mm.

Dieser Arbeitskopf 42 eignet sich zur Einarbeitung (ggf. nach vorheriger Vorarbeit mit einem rotierenden Bohrwerkzeug) sowohl für eine Kavität K für ein Inlay bzw. Insert 91 (s.z.B. Fig. 21) als auch zur Einarbeitung oder Fertigbearbeitung (evtl. nach Vorarbeit mit einem rotierenden Bohrwerkzeug) einer Kavität K für eine Zahnkrone gemäß Fig. 40. Bei einer Versorgung mit einer Zahnkrone ist es vorteilhaft, die Kavität K so weit einzuarbeiten, daß der Steg 125 eine Gingivalstufe 126 bildet. Bei der Anfertigung einer Kavität K für ein Inlay bzw. Insert 91 kann diese mit oder ohne Gingivalstufe 126 ausgeführt werden.

Die Breite s des Antriebskopf 42 bzw. der Kavität K ist nach der entsprechenden Breite des kariösen Defektes zu bestimmen. Je größer die Breite s ist, d.h. je größer der Krümmungsbereich ist, umso größer ist auch der von den seitlichen divergenten Flächen 59 eingeschlossene Winkel w6. Bei breiten Arbeitsköpfen 42 oder Kavitäten K kann der Winkel w6 (je nach Größe des Winkels wl) 90° und mehr betragen, z.B. im Bereich von Prämolaren. Es ist deshalb vorteilhaft, mehrere Arbeitsköpfe 42 unterschiedlicher Breite s vorzusehen, bzw. auf Lager zu halten, um für übliche Versorgungen einen passenden Arbeitskopf 42 zur Verfügung zu haben. Dies gilt auch für entsprechend zugehörige Inlays bzw. Inserts 91 bezüglich ihrer Breite und ihrer zu bestimmenden oder ebenfalls in Stufen vorgesehenen Längen e1, was auch für alle anderen vorbeschriebenen Ausgestaltungen der Arbeitsköpfe 42 gilt.

Die zum freien Ende des Arbeitskopfes 42 hin gerichtete Divergenz von etwa 2 bis 8°, insbesondere etwa 4 bis 6°, ist bei der Ausgestaltung gemäß den Figuren 37 bis 39 mit dem Winkel w7 verdeutlicht. Auch bei dieser Ausgestaltung können im Arbeitskopf 42 ein an der Frontfläche 56b ausmündender Kühlkanal 27 oder mehrere an den Arbeitsflächenteil ausmündende Kühlkanalzweige vorgesehen sein.

## Patentansprüche

1. Werkzeug (3) zur abrasiven Bearbeitung von Zähnen (71) für ein einen Schwingungserreger (2) aufweisendes zahnärztliches Handstück, wobei das Werkzeug (3) einen mit dem Schwingungserreger (2) zu verbindenden Schaft (41) und einen an diesem vorgesehenen Arbeitskopf (42a) aufweist, der eine gegen den Bearbeitungsbereich am Zahn (71) zu richtende erste abrasive Arbeitsfläche (56b) sowie eine von dem Bearbeitungsbereich weggerichtete glatte Rückenfläche (F) aufweist,
**dadurch gekennzeichnet,**
**dass** der Arbeitskopf (42a) zur Ausarbeitung einer divergierende Randflächen aufweisenden Zahnkavität (K) zwischen der ersten Arbeitsfläche (56b) und der glatten Rückenfläche (F) weitere, konvergierend gegen die erste Arbeitsfläche (56b) verlaufende Arbeitsflächen (59) aufweist.

2. Werkzeug nach Anspruch 1,
**dadurch gekennzeichnet,**
**dass** die Arbeitsflächen (56b, 56c, 59) des Werkzeugs (3) prismatisch oder bezüglich einer in die Längsrichtung des freien Schaftendes gerichteten Ausarbeitungsrichtung (40) konvergent sind.

3. Werkzeug nach Anspruch 2,
**dadurch gekennzeichnet,**
**dass** mehrere Werkzeuge (3) mit Arbeitsköpfen (42a) vorgesehen sind, die sich bezüglich der Ausarbeitungsrichtung (40) in einer oder in beiden Dimensionen (b, c) ihrer Querschnittsform und/oder -größe und/oder bezüglich ihrer sich dazu rechtwinklig erstreckenden Abmessung (d) voneinander unterscheiden.

4. Werkzeug nach einem der vorherigen Ansprüche,
**dadurch gekennzeichnet,**
**dass** der Arbeitskopf (42a, 42b, 42c) in einer oder in beiden Dimensionen seines Querschnitts gleich oder größer bemessen ist als der Schaft (41).

5. Werkzeug nach einem der vorherigen Ansprüche,
**dadurch gekennzeichnet,**
**dass** der Schaft (41) seitlich ausgebogen ist und vorzugsweise in einer sich schräg zur Längsmittelachse (54) des Schaftfußes erstreckenden Position, insbesondere in einem Abstand (a) von der Längsmittelachse (54) seines Schaftfußes, endet.

6. Werkzeug nach einem der vorherigen Ansprüche,
**dadurch gekennzeichnet,**
**dass** der Arbeitskopf (42b, 42c, 42d) eine quer konvex oder konkav gewölbte erste Arbeitsfläche (56h, 56k) aufweist.

7. Werkzeug nach Anspruch 6,
**dadurch gekennzeichnet,**
**dass** die Arbeitsfläche (56h, 56k) ellipsenförmig oder kugelförmig gewölbt ist.

8. Werkzeug nach einem der vorherigen Ansprüche,
**dadurch gekennzeichnet,**
**dass** zur Handhabung des Werkzeugs (3) ein Handstück (1) mit einem Oszillationsantrieb vorgesehen ist, das an seinem hinteren Ende durch eine Versorgungsleitung mit einer Versorgungseinrichtung verbunden ist und an dessen vorderem Ende das Werkzeug (3) lösbar verbindbar ist.

9. Werkzeug nach einem der vorherigen Ansprüche 5 bis 8,
**dadurch gekennzeichnet,**
**dass** die erste Arbeitsfläche (56b) des Arbeitskopfes (42a) bezüglich des Schaftes (41) oder bezüglich des Handstücks (1) nach vorne oder nach hinten gerichtet ist.

10. Werkzeug nach einem der vorherigen Ansprüche 5 bis 9,
**dadurch gekennzeichnet,**
**dass** die erste Arbeitsfläche (56b) des Arbeitskopfes (42a) bezüglich einer die Längsmittelebene des Schaftes (41) und/oder des Handstücks (1) schneidenden Längsebene seitlich verdreht ist, vorzugsweise um einen spitzen Winkel (w1) von etwa bis 45 Grad, insbesondere etwa 15 bis 30 Grad.

11. Werkzeug nach einem der vorherigen Ansprüche,
**dadurch gekennzeichnet,**
**dass** im Werkzeug (3) ein Fluid-Zuführungskanal (25) vorgesehen ist, der ggf. mit mehreren Kanalzweigen (25a, 25b, 25c) an vorhandenen Arbeitsflächen (56) ausmündet.

12. Kombination von Einsatzteil (91, 91a) und Werkzeug (3), wobei das Einsatzteil (91, 91a) zum Einsetzen in eine Zahnkavität (K), die zuvor mit einem oszillierend bewegbaren Werkzeug (3) ausgearbeitet worden ist, geeignet ist, wobei das Werkzeug (3) einen mit einem Schwingungserreger (2) zu verbindenden Schaft (41) und einen an diesem vorgesehen Arbeitskopf (42a) aufweist, der eine gegen den Bearbeitungsbereich am Zahn zu richtende erste abrasive Arbeitsfläche (56b) sowie eine dieser gegenüberliegende glatte Rückenfläche (F) aufweist, wobei der Arbeitskopf (42a) ferner zwischen der ersten abrasiven Arbeitsfläche (56b) und der glatten Rückenfläche (F) weitere konvergierend gegen die erste Arbeitsfläche (56b) verlaufende Arbeitsflächen (59) aufweist, und wobei das Einsatzteil (91, 91A) bezüglich seines von den Querschnittswänden der Kavität (K) umschlossenen Flächenbereiches an die Querschnittsabmessung und -form des Arbeitskopfes (42a) vorgefertigt angepasst ist.

13. Einsatzteil nach Anspruch 12,
**dadurch gekennzeichnet,**
**dass** die an den Kavitätwänden (KW) anliegenden Anlageflächen des Einsatzteiles (91, 91A) prismatisch oder bezüglich einer in die Längsrichtung des freien Schaftendes gerichtete Ausarbeitungsrichtung (40) konvergent sind.

14. Einsatzteil nach Anspruch 12 oder 13,
**dadurch gekennzeichnet,**
**dass** mehrere Einsatzteile (91, 91A) vorgesehen sind, die sich bezüglich einer oder beider Dimensionen ihrer Querschnittsform und/oder -größe und/oder bezüglich ihrer sich dazu rechtwinklig erstreckenden Abmessung (e1) voneinander unterscheiden.

15. Einsatzteil nach einem der vorherigen Ansprüche 12 bis 14,
**dadurch gekennzeichnet,**
**dass** mehrere Einsatzteile (91, 91A) vorgesehen sind, die sich hinsichtlich ihrer Farbe unterscheiden und an übliche Zahnfarben angepasst sind.

16. Einsatzteil nach einem der vorherigen Ansprüche 12 bis 15,
**dadurch gekennzeichnet,**
**dass** das Einsatzteil (91, 91A) aus Metall oder Kunststoff, insbesondere Kompositkunststoff und/oder lichtdurchlässigem Material, insbesondere Glaskeramik besteht.

17. Einsatzteil nach einem der vorherigen Ansprüche 12 bis 16,
**dadurch gekennzeichnet,**
**dass** die sich quer zur Okklusionsfläche des Zahns (71) erstreckende Abmessung (e1) des Einsatzteils (91, 91A) kleiner oder größer bemessen ist als die Tiefe (e) der Kavität (K).

18. Einsatzteil nach einem der vorherigen Ansprüche 12 bis 17,
**dadurch gekennzeichnet,**
**dass** bei einem approximalen, okklusalen, inzisalen, bukkalen oder lingualen Einsatzteil (91, 91A) dessen freie Seitenfläche ebenfalls vorgefertigt ist, vorzugsweise idealisiert ist.

19. Einsatzteil nach einem der vorherigen Ansprüche 12 bis 18,
**dadurch gekennzeichnet,**
**dass** das Einsatzteil (91, 91A) in seinem okklusalen Bereich einen Applikationsansatz (93) aufweist, der vorzugsweise das Tiefenmaß (e) der Kavität (K) überragt.

## Claims

1. Tool (3) for the abrasive working of teeth (71), for a dental handpiece having an oscillation generator (2), the tool (3) having a shaft (41) to be connected with the oscillation generator (2) and a working head (42a) provided on this shaft, which working head has a first abrasive working surface (56b) to be directed against the working region on the tooth (71) and a smooth back surface (F) directed away from the working region,
**characterized in that**,
the working head (42a) has, for the working of a tooth cavity (K) having divergent edge surfaces, between the first working surface (56b) and the smooth back surface (F), further working surfaces (59) running convergently against the first working surface (56b).

2. Tool according to claim 1,
**characterized in that**,
the working surfaces (56b, 56c, 59) of the tool (3) are prismatic or, with reference to a direction of working (40) directed in the longitudinal direction of the free shaft end, are convergent.

3. Tool according to claim 2,
**characterized in that**,
a plurality of tools (3) with working heads (42a) are provided which differ from one another, with regard to the working direction, in one or both dimensions (b, c) of their cross-sectional form and/or size and/or with regard to their dimension (d) extending at right angles thereto.

4. Tool according to any preceding claim,
**characterized in that**,
the working head (42a, 42b, 42c) is, in one or both dimensions of its cross-section, the same size or larger than the shaft (41).

5. Tool according to any preceding claim,
**characterized in that**,
the shaft (41) is laterally bent outwardly and preferably ends in a position extending obliquely of the longitudinal middle axis (54) of the shaft foot, in particular at a spacing (a) from the longitudinal middle axis (54) of its shaft foot.

6. Tool according to any preceding claim,
**characterized in that**,
the working head (42b, 42c, 42d) has a transversely convexly or concavely arched first working surface (56h, 56k).

7. Tool according to claim 6,
**characterized in that**,
the working surface (56h; 56k) is arched in the form of an ellipse or a sphere.

8. Tool according to any preceding claim,
**characterized in that**,
for manipulation of the tool (3) there is provided a handpiece (1) having an oscillation drive, which is connected at its rearward end by means of a supply line with a supply device, and at its forward end is releasably connectable with the tool (3).

9. Tool according to any of preceding claims 5 to 8,
**characterized in that**,
relative to the shaft (41) or relative to the handpiece (1), the first working surface (56b) of the working head (42a) is directed forwardly or rearwardly.

10. Tool according to any of preceding claims 5 to 9,
**characterized in that**,
the first working surface (56b) of the working head (42a) is laterally rotated with reference to a longitudinal plane cutting the longitudinal middle plane of the shaft (41) and/or of the handpiece (1), preferably by an acute angle (w1) of approximately up to 45°, in particular approximately 15 to 30°.

11. Tool according to any preceding claim,
**characterized in that**,
that a fluid supply channel (25) is provided in the tool (3), which fluid supply channel opens out, if appropriate with a plurality of channel branches (25a, 25b, 25c), at working surfaces (56) present.

12. Combination of insert (91, 91a) and tool (3), the insert (91, 91a) being suitable for placing in a tooth cavity (K) which has previously been worked with a tool (3) which is moveable in oscillations, the tool (3) having a shaft (41) to be connected with an oscillation generator (2) and a working head (42a) provided on this shaft, which working head has a first abrasive working surface (56b) to be directed against the working region on the tooth and a smooth back surface (F) lying opposite this first working surface, the working head (42a) further having between the first abrasive working surface (56b) and the smooth back surface (F), further working surfaces (59) running convergently against the first working surface (56b),
and the insert (91, 91a) being prefabricated adapted, with regard to its surface region surrounded by the cross-sectional walls of the cavity (K), to the cross-sectional dimension and shape of the working head (42a).

13. Insert according to claim 12,
**characterized in that**,
the bearing surfaces of the insert (91, 91A) abutting on the cavity walls (KW), are prismatic or, with reference to the direction of working (40) directed in the longitudinal direction of the free shaft end, are convergent.

14. Insert according to claim 12 or 13,
**characterized in that**,
a plurality of inserts (91, 91A) are provided which differ from one another with regard to one or both dimensions of their cross-sectional shape and/or size and/or with regard to their dimension (e1) extending at right angles thereto.

15. Insert according to any of preceding claims 12 to 14,
**characterized in that**,
a plurality of inserts (91, 91A) are provided which differ from one another with regard to their color and are adapted to usual tooth colorings.

16. Insert according to any of preceding claims 12 to 15,
**characterized in that**,
the insert (91, 91A) is of metal or plastics, in particular composite plastics material and/or translucent material, in particular glass ceramics.

17. Insert according to any of preceding claims 12 to 16,
**characterized in that**,
the dimension (e1) of the insert (91, 91A) extending transversely to the occlusion surface of the tooth (71) is smaller or larger than the depth (e) of the cavity (K).

18. Insert according to any of preceding claims 12 to 17,
**characterized in that**,
in the case of an approximal, occlusal, incisal, buccal or lingual insert (91, 91A) its free side surface is likewise pre-fabricated, preferably idealized.

19. Insert according to any of preceding claims 12 to 18,
**characterized in that**,
the insert (91, 91A) has in its occlusal region an application portion (93) which preferably projects beyond the depth extent (e) of the cavity (K).

## Revendications

1. Outil (3) pour le traitement abrasif de dents (71) destiné à une pièce à main de dentisterie présentant un générateur d'oscillations (2), l'outil (3) présentant une tige (41) à relier avec le générateur d'oscillations (2) et une tête de travail ménagée sur celle-ci (42a), présentant une première surface de travail abrasive (56b) à diriger vers la zone de traitement de la dent (71), ainsi qu'une surface arrière lisse (F) détournée de la zone de traitement, **caractérisé en ce que** la tête de travail (42a) présente pour la préparation d'une cavité dentaire (K) dotée d'une surface périphérique divergente, entre la première surface de travail (56b) et la surface arrière lisse (F), une autre surface de travail (59) s'étendant de manière convergente vers la première surface de travail (56b).

2. Outil selon la revendication 1, **caractérisé en ce que** les surfaces de travail (56b, 56c, 59) de l'outil (3) convergent de façon prismatique ou relativement à une direction de préparation (40) orientée dans la direction longitudinale de l'extrémité libre de la tige.

3. Outil selon la revendication 2, **caractérisé en ce que** plusieurs outils (3) sont dotés de têtes de travail (42a) qui se différencient les unes des autres relativement à la direction de préparation (40) dans une ou deux dimensions (b, c) de leur forme et/ou taille de section transversale et/ou relativement à leur dimension (d) s'étendant à angle droit par rapport à celle-ci.

4. Outil selon l'une quelconque des revendications précédentes, **caractérisé en ce que** la tête de travail (42a, 42b, 42c) mesurée dans l'une ou dans les deux dimensions de sa section transversale est d'une taille égale ou supérieure à celle de la tige (41).

5. Outil selon l'une quelconque des revendications précédentes, **caractérisé en ce que** la tige (41) est recourbée latéralement et de préférence, se termine dans une position s'étendant obliquement par rapport à l'axe médian longitudinal (54) de la base de la tige, en particulier à distance (a) de l'axe médian longitudinal (54) de la base de la tige.

6. Outil selon l'une quelconque des revendications précédentes, **caractérisé en ce que** la tête de travail (42b, 42c, 42d) présente une première surface de travail (56h, 56k) bombée perpendiculairement de manière convexe ou concave.

7. Outil selon la revendication 6, **caractérisé en ce que** la surface de travail (56h, 56k) est bombée de manière ellipsoïdale ou sphérique.

8. Outil selon l'une quelconque des revendications précédentes, **caractérisé en ce que**, pour manipuler l'outil (3), est prévue une pièce à main (1) dotée d'une commande par oscillations, qui est liée, au niveau de son extrémité arrière, à un dispositif d'alimentation par une conduite d'alimentation et qui est liée de manière détachable au niveau de son extrémité avant, à l'outil (3).

9. Outil selon l'une quelconque des revendications 5 à 8, **caractérisé en ce que** la première surface de travail (56b) de la tête de travail (42a) est orientée relativement à la tige (41) ou relativement à la pièce à main (1) vers l'avant ou vers l'arrière.

10. Outil selon l'une quelconque des revendications 5 à 9, **caractérisé en ce que** la première surface de travail (56b) de la tête de travail (42a) est tournée relativement à l'un des plans médians longitudinaux de la tige (41) et/ou du plan longitudinal coupant la pièce à main (1), de préférence en un angle aigu (w1) d'environ 45 degrés, en particulier d'environ 15 à 30 degrés.

11. Outil selon l'une quelconque des revendications précédentes, **caractérisé en ce qu'**un canal d'acheminement de fluide (25) est prévu dans l'outil, ledit canal débouchant éventuellement dans plusieurs branches de canal (25a, 25b, 25c) au niveau des surfaces de travail présentes.

12. Combinaison de pièces détachées (91, 91a) et d'outil, la pièce détachée (91, 91a) étant appropriée pour l'insertion dans une cavité dentaire (K) qui a été préalablement préparée à l'aide d'un outil mobile oscillant (3), l'outil (3) présentant une tige (4) à relier à un générateur d'oscillations (2) et une tête de travail (42a) prévue au niveau de celle-ci, qui présente une première surface de travail abrasive (56b) à orienter vers la zone de traitement de la dent ainsi qu'une surface arrière (F) lisse se trouvant du côté opposé à celle-ci, la tête de travail (42a) présentant en outre entre la première surface de travail abrasive (56b) et la surface arrière lisse (F) d'autres surfaces de travail (59) s'étendant de manière convergente contre la première surface de travail (56b), et la pièce détachée (91, 91A) étant adaptée préalablement à la dimension et forme de section transversale de la tête de travail (42a) relativement à sa surface entourant les parois transversales de la cavité (K).

13. Pièce détachée selon la revendication 12, **caractérisée en ce que** les surfaces d'appui adjacentes aux parois de la cavité (PC) de la pièce détachée (91, 91A) convergent de manière prismatique ou par rapport à une direction de préparation (40) orientée dans la direction longitudinale de l'extrémité libre de la tige.

14. Pièce détachée selon la revendication 12 ou 13, **caractérisée en ce que** plusieurs pièces détachées (91, 91A) qui se différentient les unes des autres relativement à une ou aux deux dimensions de leur forme et/ou taille de section transversale et/ou relativement à leur dimension (e1) s'étendant à angle droit par rapport à celle-ci, sont prévues.

15. Pièce détachée selon l'une quelconque des revendications 12 à 14, **caractérisée en ce que** sont prévues plusieurs pièces détachées (91, 91A) qui se distinguent par leurs couleurs et sont adaptées aux couleurs habituelles des dents.

16. Pièce détachée selon l'une quelconques des revendications 12 à 15, **caractérisé en ce que** la pièce détachée (91, 91A) est en métal ou en plastique, en particulier en matériau composite et/ou en matériau laissant passer la lumière, en particulier la vitrocéramique.

17. Pièce détachée selon l'une quelconque des revendications 12 à 16, **caractérisée en ce que** la dimension (e1) de la pièce détachée (91, 91A) s'étendant perpendiculairement par rapport à la surface d'occlusion de la dent (71) est plus petite ou plus grande que la profondeur (e) de la cavité (K).

18. Pièce détachée selon l'une quelconque des revendications 12 à 17, **caractérisée en ce qu'**elle est de préférence optimisée par une pièce détachée (91, 91A) approximale, occlusale, incisale, buccale ou linguale, dont la surface latérale libre est également préalablement formée.

19. Pièce détachée selon l'une quelconque des revendications 12 à 18, **caractérisée en ce que** la pièce détachée (91, 91A) présente dans sa zone occlusale, un embout d'application (93) qui dépasse de préférence de la profondeur (e) de la cavité (K).
